# EUROPEAN PATENT APPLICATION

(11) **EP 2 495 920 A1**
(43) Date of publication of application: **05.09.2012**
(21) Application number: 09850861.7
(22) Date of filing: 30.10.2009
(51) Int. Cl.: H04L 12/66

(54) **ADDRESS TRANSLATION DEVICE, ADDRESS TRANSLATION METHOD, AND ADDRESS TRANSLATION PROGRAM**

(71) Applicant: Fujitsu Limited, Kawasaki-shi, Kanagawa 211-8588 (JP)
(72) Inventor: NAMIHIRA, Daisuke, Kawasaki-shi Kanagawa 211-8588 (JP)
(74) Representative: Ward, James Norman
(86) International application number: PCT/JP2009/068719
(87) International publication number: WO 2011/052082

(57) **Abstract**

An address translation device (100) translates to GA3 (a global IP), the private IP (PA1) of a second packet (first received packet) transmitted from PA1 on a LAN (101) to GA1 on a WAN (102); and translates to 1024 (a global port), the private port number (3000) of the second packet. Since the destination IP (GA2) of a first packet (third received packet) from PA1 to GA2 is different from the destination IP (GA1) of the second packet, the address translation device (100) translates the private IP (PA1) of the first packet to GA3, which is the same global IP allocated to the second packet; and translates the private port number (3002) of the first packet to 1024, which is the same global port number allocated to the second packet.

## Description

### TECHNICAL FIELD

The present invention relate to an address translation device, an address translation method, and an address translation program that translate the address of a packet communicated between a private network and a global network.

### BACKGROUND ART

In the current Internet communication environment, Internet Protocol version 4 (IPv4) is used and on the Internet, only communication by IPv4 global addresses (globally unique, allocated addresses) is performed.

Nonetheless, consequent to the rising number of network connected terminals and the increasing need for protection against upsurges in the exploitation of terminal vulnerability, business and residential networks use private addresses that can be used only for communication within the local business or residential network. When communication with a counterpart terminal is performed via the Internet, typically, an address translation device is used and the private address is converted into a global address (network address translation (NAT)) (see, for example, Patent Documents 1 and 2). A global address and a port number can be uniquely allocated to connections equivalent to global address count×port number count.

Address translation, for example, in the case of businesses, is implemented at the boundary of the local business network and the Internet, and in the case of residences, is implemented at a broadband router setup in the residence.

In recent years, the extent to which the number of network connected terminals has increased is remarkable and it is predicted that available IPv4 addresses will be exhausted; a state of insufficient IPv4 global addresses for Internet communication is approaching.

Although address translation enabling multiple terminals to be consolidated to the same global address is effective, in the case of residences, since address translation is implemented by a broadband router, each residence is allocated 1 global address and consequently, address allocation is not very efficient.

Thus, rather than performing address translation by broadband routers setup in residences, carrier-grade NAT is known that implements address translation collectively at carrier providers such as Internet service providers (ISPs). Carrier-grade NAT is an approach of performing NAT on an extremely large-scale and of exclusively undertaking communication of all ISP subscriber terminals and performing address translation.

Patent Document 1: Japanese Laid-Open Patent Publication No. 2002-204252
Patent Document 2: Japanese Laid-Open Patent Publication No. 2000-156710

### DISCLOSURE OF INVENTION

### PROBLEM TO BE SOLVED BY THE INVENTION

Nonetheless, even with carrier-grade NAT, the address translation scheme is identical to the NAT address translation scheme of implementing address translation by the broadband router at residences. Therefore, a paired global IP and port number are allocated for each communication (Transmission Control Protocol (TCP)/User Datagram Protocol (UDP) communication) and when the communication has ended, the global IP and port number are reallocated to another communication, making global address use efficient.

However, currently, the extreme rise in the number and types of terminals connecting to the Internet as well as the increase in the number of TCP connections used for one communication are posing problems. For example, for a personal computer (PC) user to merely view a Web page using browser, in the past, 1 TCP connection was used, however, recently, several hundred TCP connections may be used.

Consequent to the problem of increases in the quantity of global addresses used, a further problem arises in that sufficient improvement in the efficiency of global address use by an introduction of carrier-grade NAT cannot be realized (e.g., since there are 65,000 port numbers, when 65,000 TCP connections and UDP communications occur, other global IP addresses have to prepared).

To solve the problems associated with the conventional technologies above, an object of the present invention is to provide an address translation device, an address translation method, and an address translation program that facilitate efficient global address and port number allocation and can reduce the quantity of global addresses used.

### MEANS FOR SOLVING PROBLEM

According to one aspect of the present invention an address translation device is provided that includes a receiver that receives a packet that is from a communication apparatus on a private network to a communication apparatus on a global network; an address determiner that determines whether a destination address of a first packet received by the receiver matches a destination address of a second packet that was received before the first packet; a translator that when the address determiner makes a determination of no matching, translates a source private address of the first packet to a source global address that has been allocated to the second packet; and a transmitter that transmits the first packet that has been translated by the translator.

### EFFECT OF THE INVENTION

The present address translation device, address translation method, and address translation program facilitate efficient global address and port number allocation and can reduce the quantity of global addresses used.

### BRIEF DESCRIPTION OF DRAWINGS

FIG. 1 is a diagram of one implementation example of the present invention;
FIG. 2 is a diagram depicting NAT search tables;
FIG. 3 is a diagram depicting a state management table;
FIG. 4 is a diagram depicting an IP/port utilization table;
FIG. 5 is a block diagram of a hardware configuration of an address translation device according to the present embodiment;
FIG. 6 is a block diagram of a functional configuration of the address translation device 100;
FIG. 7 is a diagram depicting the NAT search table after the entries in a first example have been added;
FIG. 8 is a diagram depicting the state management table after the entries in the first example have been added;
FIG. 9 is a diagram depicting the IP/port utilization table after the entries in the first example have been added;
FIG. 10 is a diagram depicting the state management table after the settings in a second example;
FIG. 11 is the IP/port utilization table after the entry addition in a third example;
FIG. 12 is a diagram depicting the NAT search tables after the entry addition in the third example;
FIG. 13 is a flowchart (part 1) of an example of address translation processing by the address translation device;
FIG. 14 is a flowchart (part 2) of the example of address translation processing by the address translation device;
FIG. 15 is a flowchart (part 3) of the example of address translation processing by the address translation device;
FIG. 16 is a flowchart (part 4) of the example of address translation processing by the address translation device;
FIG. 17 is a flowchart (part 5) of the example of address translation processing by the address translation device;
FIG. 18 is a flowchart (part 6) of the example of address translation processing by the address translation device;
FIG. 19 is a flowchart (part 7) of the example of address translation processing by the address translation device;
FIG. 20 is a flowchart (part 8) of the example of address translation processing by the address translation device;
FIG. 21 is a flowchart (part 9) of the example of address translation processing by the address translation device;
FIG. 22 is a flowchart (part 10) of the example of address translation processing by the address translation device;
FIG. 23 is a flowchart (part 1) of entry deletion processing by the address translation device;
FIG. 24 is a flowchart (part 2) of entry deletion processing by the address translation device; and
FIG. 25 is a flowchart (part 3) of entry deletion processing by the address translation device.

### BEST MODE(S) FOR CARRYING OUT THE INVENTION

Preferred embodiments of an address translation device, an address translation method, and an address translation program according to the present invention will be explained with reference to the accompanying drawings.

In the present embodiment, in address translation, by allocating the same global address and port number to multiple communications ("packet" in the present embodiment), the wall of being able to make allocations for only 65,000 communications with 1 global address can be broken down, thereby enabling more efficient address utilization.

Operation cannot be performed without setting a global address and port number (a combination of an address and port) of unique values to 1 communication. Allocation of the same IP address and port number by a server or client, to multiple communications is a rule violation and consequently, correct operation becomes impossible.

However, the rule is for a server or client end terminal and in an address translation device performing address translation between a private network and a global network, if the combination of the source private address/port number and the destination address/port number is uniquely determined, address translations can be discriminated.

Therefore, even if a global address and port combination used in address translation is allocated to multiple communications having different communication destination addresses, communication does not breakdown. For example, at an address translation device, since communication destination addresses differ, the combination of the source address/port and the destination address/port is not the same for multiple communications, enabling discrimination processing for address translation processing. At the server, even if another communication having the same source global address and port number is on the network, the communication will not arrive at the server and therefore, processing at the server does not breakdown.

Further, at the client, if address translation is performed without problems, the source private address and port number combination allocated by the client is unique and non-changeable; and therefore, processing at the client does not breakdown.

Accordingly, in the present embodiment, the same source global address is allocated to 2 packets having different destination addresses, thereby improving address allocation efficiency and suppressing the quantity of addresses used.

With reference to the accompanying drawings, the present embodiment will be described in detail.

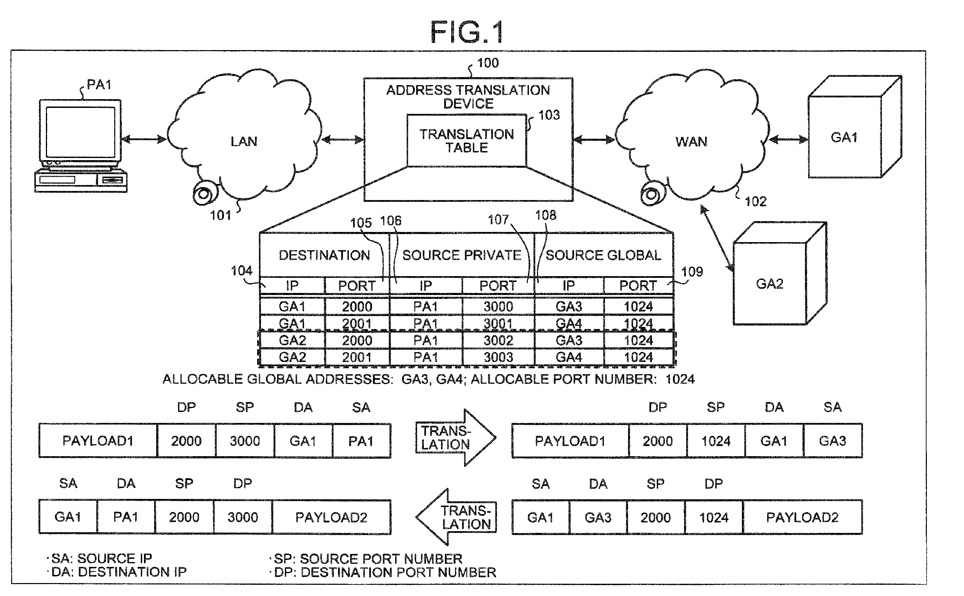

FIG. 1 is a diagram of one implementation example of the present invention. In FIG. 1, PA1 is a communication terminal on a local area network (LAN) 101, which is a private network, and GA1 and GA2 are respectively communication terminals on a wide area network (WAN) 102, which is a global network. The address of a packet from PA1 to GA1 or GA2 is subject to translation by an address translation device 100 and subsequently, is transmitted.

In this example, GA3 and GA4 are global addresses that can be allocated by the address translation device 100, and 1024 is an allocable port number.

The destination IP (destination address) of the first packet is GA1 and the port (port number) is 2000; the source private IP is PA1 and the port is 3000.

The address translation device 100 accordingly enters the values into fields (including a destination IP 104, a destination port 105, a source private IP 106, and a source port 107) of a translation table 103. The translation table 103 stores therein as 1 record and for each packet received, the destination IP 104, the destination port 105, the source private IP 106, the source port 107, a source global IP 108, and a source global port 109.

The address translation device 100 selects GA3 from among the allocable global addresses, selects 1024 for the port number and in the translation table 103, enters GA3 as the source global IP 108 and enters 1024 as the source global port 109.

The address translation device 100 translates the source private IP of the first packet to GA3 as the source global IP 108 and translates the source private port of the first packet to 1024 as the source global port 109.

The destination IP of the second packet is GA1 and the port is 2001; the source private IP is PA1 and the port is 3001. The address translation device 100 accordingly enters into the translation table 103, the destination IP 104 and the destination port 105; and the source private IP 106 and the source port 107. The address translation device 100 selects GA3 from among the allocable global addresses.

However, since the destination IP of the second packet is identical to the destination IP of the first packet, which is also allocated GA3 for the source global IP, and the destination ports differ, GA4 is allocated as the global address and 1024 is allocated for the port number. The address translation device 100 enters into the translation table 103, GA4 as the source global IP 108 and 1024 as the source global port 109.

The address translation device 100 translates the source private IP of the second packet to GA4 as the source global IP 108, translates the source private port of the second packet to 1024 as the source global port 109, and transmits the packet after translation.

The destination IP of the third packet is GA2 and the port is 2000; the source private IP is PA1 and the port is 3002. The address translation device 100 accordingly enters into the translation table 103, the destination IP 104 and the destination port 105; and the source private IP 106 and the source port 107. The address translation device 100 selects GA3 from among the allocable global addresses.

Since the destination IP of the third packet differs from the destination IP of the first packet allocated GA3 for the source global IP, GA3 is allocated for the source global IP of the third packet and 1024 is allocated for the port. The address translation device 100 enters into the translation table 103, GA3 as the source global IP 108 and 1024 as the source global port 109.

The address translation device 100 translates the source private IP of the third packet to GA3 as the source global IP, translates the source private port to 1024 as the source global port, and transmits the packet after translation.

Thus, when destination addresses differ, the same global address and port number can be allocated, enabling efficient address allocation to be facilitated and a suppression of the quantity of global addresses used.

The destination IP of the fourth packet is GA2 and the port is 2001; the source private IP is PA1 and the port is 3003. The address translation device 100 accordingly enters into the translation table 103, the destination IP 104 and the destination port 105; and the source private IP 106 and the source port 107, and selects GA3 from among the allocable global addresses.

The destination IP of the fourth packet differs from the destination IP of the first packet allocated GA3 for the source global IP. However, since the destination IP of the fourth packet is identical to the destination IP of the third packet and the destination ports differ, the address translation device 100 selects GA4 from among the allocable global addresses.

Since the destination IP of the fourth packet and the destination IP of the second packet allocated GA4 as the source global IP differ, GA4 is allocated for the source global IP of the fourth packet and 1024 is allocated for the source global port number. The address translation device 100 accordingly enters into the translation table 103, GA4 as the source global IP 108 and 1024 as the source global port 109.

The address translation device 100 translates the source private IP of the fourth packet to GA4 as the source global IP, translates the source private port to 1024 as the source global port, and transmits the packet after translation.

Consequently, the same global address and port number allocated to the second packet having a differing destination address can be allocated to the fourth packet, enabling efficient address allocation to be facilitated.
In addition, the quantity of global addresses used can be suppressed.

Next, packet transmission from the WAN 102 to the LAN 101 will be described. The address translation device 100 determines for each record in the translation table 103, whether the source IP of a packet from the WAN 102 and the IP 104 match and whether the source port number of the packet and the destination port 105 match. The address translation device 100 further determines whether the IP 108 and the destination IP of the packet match and whether the source global port 109 and the destination port of the packet match. The address translation device 100 translates the destination IP of the packet to the IP 106 of a record for which all have been determined to match and further translates the destination port number of the packet to the source port 107 of the record.

Consequently, even if the same source address is allocated to 2 packets having a different destination, the addresses can be translated when transmitted from a global network to a private network.

In FIG. 1, address translation processing is performed using the translation table 103. In the present embodiment, an example will be described in which 3 tables, including a NAT search table, a state management table, and an IP/port utilization table are used to perform address translation processing.

### (NAT search table)

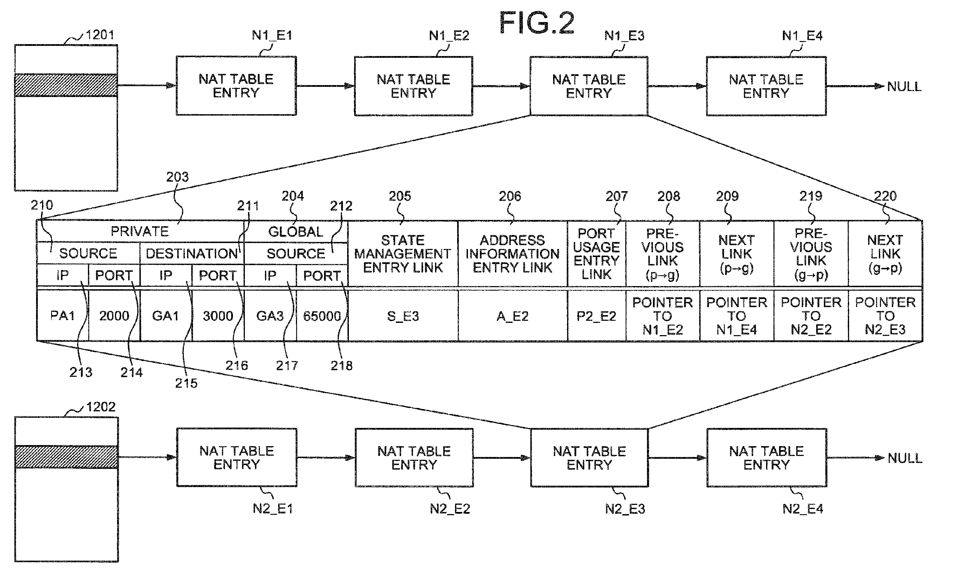

FIG. 2 is a diagram depicting NAT search tables. A NAT search table 201 and a NAT search table 202 are tables that for each flow of packets (a packet group that can be uniquely determined by source destination address and port number (hereinafter, "port")), retains information concerning an address before and after translation, are searched when a packet arrives, and are used for identifying whether the packet is to be subject to address translation and for performing the translation.

The NAT search table 201 is a table for translating a private address used on a private network to a global address used on a global network. The NAT search table 202 is a table for translating a global address used on a global network global network to a private address used on a private network. In the present embodiment, each node in a list structure format is referred to as an entry.

Further, in the present embodiment, the first entries, N1_E1 and N2_E1 (entries directly connected to a hash entry), among the NAT table entries are dummy entries that are included to facilitate processing for the addition and deletion of entries.

Each NAT table entry has fields including private 203, global 204, state management entry link 205, address information entry link 206, and port usage entry link 207. The NAT table entries in the NAT search table 201 further include fields of previous link (p (private)→g (global)) 208 and next link (p→g) 209. The NAT table entries in the NAT search table 202 further include fields of previous link (g→p) 219 and next link (g→p) 220.

Private 203 has subfields of source 210 and destination 211. Source 210 has further subfields of IP 213 and port 214. Destination 211 has further subfields of IP 215 and port 216. IP 213 indicates the source private address used on the LAN 101 and port 214 indicates the source private port used on the LAN 101. IP 215 indicates the destination address and port 216 indicates the destination port.

Global 204 has a subfield of source 212. Source 212 has further subfields of IP 217 and port 218. IP 217 indicates the source global address used on the WAN 102 and port 218 indicates the source global port used on the WAN 102.

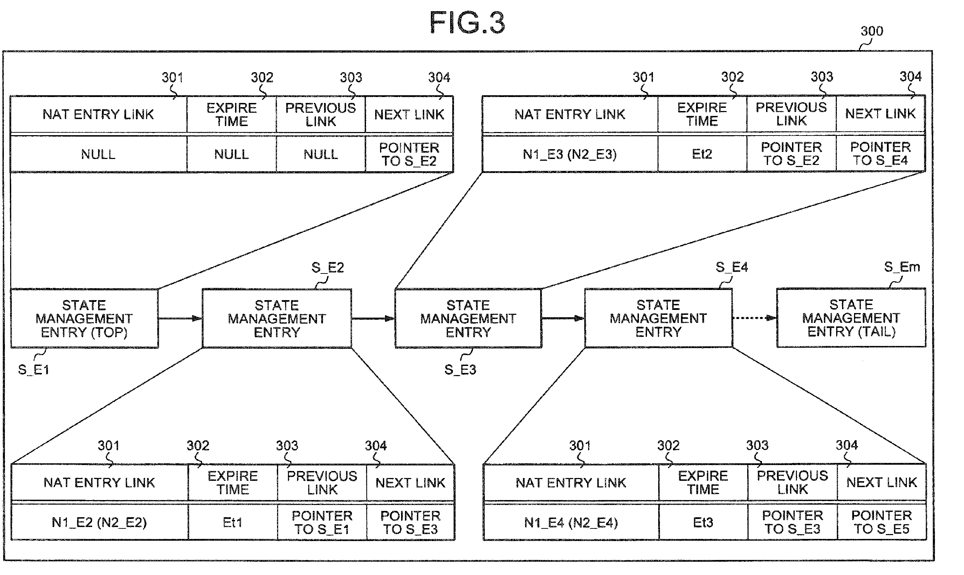

State management entry link 205 indicates to which state management entry in the state management table (described with reference to FIG. 3), the NAT table entry is linked.

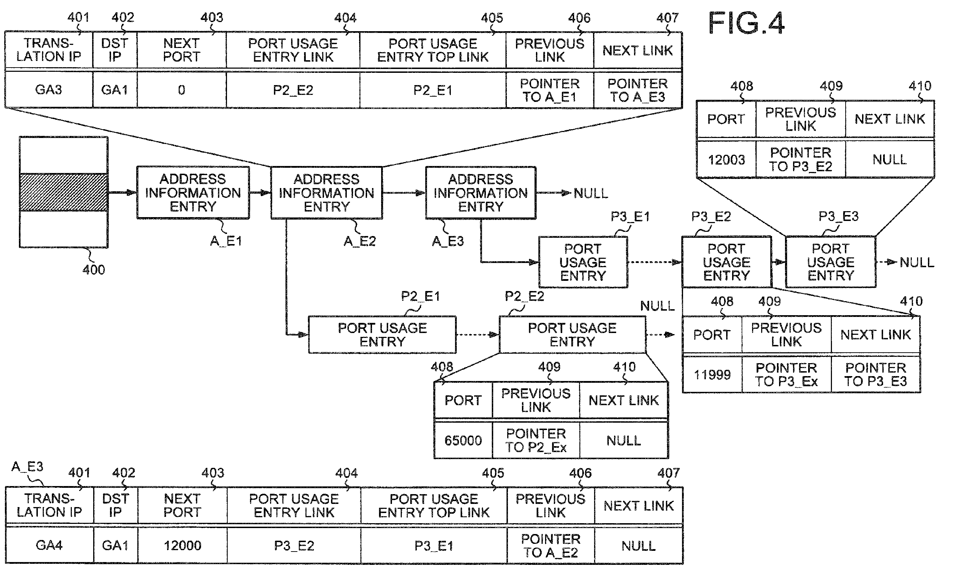

Address information entry link 206 indicates to which address information entry in the IP/port utilization table (described with reference to FIG. 4), the NAT table entry is linked.

Port usage entry link 207 indicates the port usage entry of the address information entry indicated by address information entry link 206.

The NAT table entries are a bidirectional list and consequently, previous link (p→g) 208, next link (p→g) 209, previous link (g→p) 219, and next link (g→p) 220 are used.

Taking N1_E3 and N2_E3 as examples, IP 213 is PA1; port 214 is 2000; IP 215 is GA1; and port 216 is 3000, indicating that the destination address is GA1 and the destination port is 3000. IP 217 is GA3 and port 218 is 65000. For example, when a packet is transmitted from the LAN to the WAN, PA1/2000 and GA1/3000 is appended to the packet, PA1 is translated to GA3, 2000 is translated to 65000, and the packet is transmitted to GA1 on the WAN.

The NAT search table 201 and the NAT search table 202 is stored in a storage device accessible by a computer.

### (State management table)

FIG. 3 is a diagram depicting a state management table. A state management table 300 is a table for managing the states of the NAT table entries. When the flow of given packets ceases for a given period (under TCP, sometime after the arrival of a FIN (FINISH) packet/under UDP, sometime after flow of packets ceases), the relevant NAT table entry is deleted and allocation for the next flow is necessary.

Since the state management table 300 is a table for detecting the deletion timing, each entry includes a field of expire time 302. Each state management entry further includes a field of NAT entry link 301 that indicates to which NAT table entry, the state management entry is linked.

Each state management entry in the state management table 300 has fields including NAT entry link 301, expire time 302, previous link 303, and next link 304. NAT entry link 301 indicates to which link in the NAT search table, the state management entry is associated.

Each state management entry has fields including NAT entry link 301, expire time 302, previous link 303, and next link 304. A state management entry (top) is the first entry and a dummy entry. A state management entry (tail) is the last entry and a dummy entry.

For example, since the state management entry (top) (S_E1) is a dummy entry, NAT entry link 301, expire time 302, and previous link 303 of S_E1 are each null, and next link 304 of S_E1 is a pointer to S_E2.

For S_E2, NAT entry link 301 is N1_E2, expire time 302 is Et1, previous link 303 is S_E1, and next link 304 is a pointer to S_E3.

The state management table 300 is stored in a storage device accessible by a computer.

### (IP/port utilization table)

FIG. 4 is a diagram depicting an IP/port utilization table. An IP/port utilization table 400 is a table for managing among IP/port combinations that can be used for NAT, which IP/port combination is used for which destination and similarly, is configured by the hash table and the bidirectional list structure of associated with a hash entry.

The bidirectional list structure is a first list structure. At the top of the IP/port utilization table 400, like the NAT search tables 201, 202, are dummy entries having initial values that are in a state of being connected to a single address information entry (all dummies) from a hash entry.

The address information entries form a bidirectional list appended from a hash table and storing combinations of a destination address and a source global address used in NAT. For each combination of destination address and source global address, a list of which port number is used in NAT is retained and thus, each combination has a bidirectional list structure having the respective port numbers from the address information entries. This bidirectional list structure is a second list structure.

Each address information entry has fields including translation IP 401, dst IP 402, next port 403, port usage entry link 404, port usage entry top link 405, previous link 406, and next link 407.

Since each address information entry is a node in a bidirectional list structure, each includes 2 fields including previous link 406, which indicates the link to the previous address information entry, and next link 407, which indicates the link to the next address information entry.

Translation IP 401 indicates the source global address and dst IP 402 indicates the destination address. Port usage entry top link 405 is associated with a port usage entry retaining information concerning the port in use.

Next port 403 is provided to expedite search processing and therefore, has a value indicating that the value of next port 403 can be used as the port number if a packet to be subject to NAT newly arrives and coincides with the address information entry. When a new flow arrives, if the value of next port 403 can be used, search processing becomes unnecessary. In this example, it is assumed that the value is 0, which is a value indicating that there is no next port (i.e., there are no port resources). It is further assumed that 0 indicates that port number allocation cannot be performed.

To facilitate faster search processing by sorting according to port number when the address translation device 100 inserts a port usage entry, next port 403 is a pointer indicating where the port usage entry is to be inserted, thereby eliminating the need to search for an insertion point. Each port usage entry includes a field of port 408. Further, since the port usage entries are of a bidirectional list structure, each includes fields of previous link 409, which indicates the link to the previous port usage entry, and next link 410, which indicates the link to the next address information entry. Entries P2_E1, P3_E1 are dummy entries.

Further, in the present embodiment, the following is assumed concerning usable port numbers for each allocable source global address.
· usable port numbers: 1024-65000
· smallest port (port number): 1024
· largest port (port number): 65000

The IP/port utilization table 400 is stored in a storage device accessible by a computer.

### (Hardware configuration of address translation device)

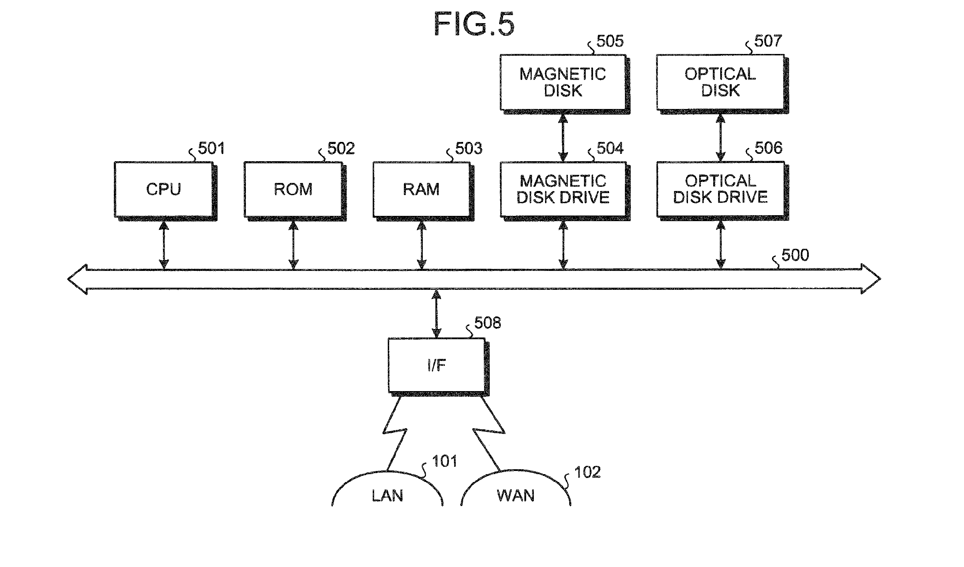

FIG. 5 is a block diagram of a hardware configuration of the address translation device according to the present embodiment. In FIG. 5, the address translation device includes a central processing unit (CPU) 501, a read-only memory (ROM) 502, a random access memory (RAM) 503, a magnetic disk drive 504, a magnetic disk 505, an optical disk drive 506, an optical disk 507, and an interface (I/F) 508, respectively connected by a bus 500.

Here, the CPU 501 governs overall control of the address translation device 100. The ROM 502 stores therein programs such as boot program. The RAM 503 is used as a work area of the CPU 501. The magnetic disk drive 504, under the control of the CPU 501, controls the reading and writing of data with respect to the magnetic disk 505. The magnetic disk 505 stores data written thereto under the control of the magnetic disk drive 504.

The optical disk drive 506, under the control of the CPU 501, controls the reading and writing of data with respect to the optical disk 50. The optical disk 507 stores data written thereto under the control of the optical disk drive 506. Data stored by the optical disk 507 is read out by a computer.

The I/F 508 is connected to a private network such as the LAN 101 and to a global network such as the WAN 102, via a communication line, and receives packets from a LAN 102, a WAN 103, etc.

### (Functional configuration of address translation device 100)

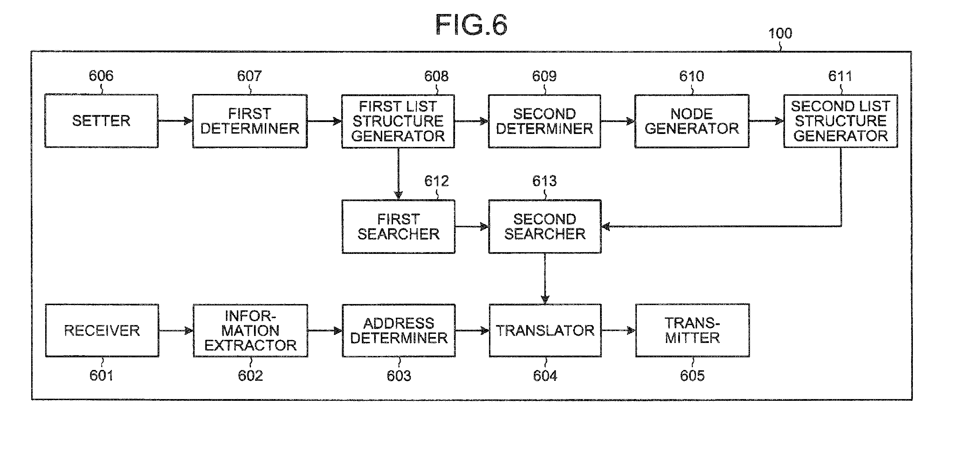

FIG. 6 is a block diagram of a functional configuration of the address translation device 100. The address translation device 100 includes a receiver 601, an information extractor 602, an address determiner 603, a translator 604, a transmitter 605, a setter 606, a first determiner 607, a first list structure generator 608, a second determiner 609, a second list structure generator 611, a first searcher 612, and a second searcher 613. Each function (the receiver 601 to the second searcher 613) is, for example, implemented by executing on the CPU 505, a program stored in a storage device such as the ROM 502, the RAM 503, the magnetic disk 505, and the optical disk 507 FIG. 5, or by the I/F 508.

Processing concerning the functions will be described using first to fourth examples. The first to third examples describe address translation for a packet transmitted from a private network to a global network. In the first example, a case is described where the destination address of a received packet differs from the destination address of a packet that has been subjected to translation.

In the second example, a case is described where the destination address/port and private address/port of a received packet are identical to the destination address/port and private address/port of a packet that has been subjected to translation.

In the third example, a case is described where the destination address and port of a received packet are identical to the destination address and port of a packet that has been subjected to translation and the private address and port of the packet differ from the private address and port of the packet that has been subjected to translation.

In the fourth example, a case is described where a packet from a global network to a private network is received.

### (First example)

In the first example, a packet that is from the LAN 101 to the WAN 102 and appended with the following address information is assumed to be received.

· source private address: PA1
· source private port: 2000
· destination address: GA2
· destination port: 3000

The receiver 601 has a function of receiving a packet that is from a communication terminal having a private address and to a communication terminal having a global address. For example, the I/F 508 receives a packet from PA1 to GA2.

The information extractor 602 has a function of extracting address information concerning the packet. Processing performed by the information extractor 602 to extract information from the packet is identical to conventional relay processing and processing at a server; and as this processing is commonly known, detailed description thereof will be omitted.

Since the destination address is a global address, the address translation device 100, based on the source private address/port and the destination address/port information of the packet, retrieves a hash entry from the NAT search table 201. For example, source private address/port and destination address/port values may be summed to retrieve the hash entry. Here, N1_E1 is assumed to be retrieved and since N1_E1 is a dummy entry, N1_E2 is assumed as Es.

The address determiner 603 determines whether the source private address of the packet and IP 213 of Es match, whether the source private port of the packet and port 214 of Es match, whether the destination address of the packet and IP 215 of Es match, and whether the destination port of the packet and port 216 of Es match. If any one is determined to not match by the address determiner 603, the entry indicated by next link 209 of Es is regarded as Es and until all are determined to respectively match, the processing of the address determiner 603 is recursively performed.

When any one is determined to not match by the address determiner 603 and next link 209 of Es is null, the address translation device 100 selects an arbitrary address from among a global address group. Below is an example of a global address group used in the embodiment.

· global address group: GA3, GA4, GA5, GA6

For example, the address translation device 100 selects GA3, which is regarded as Ad.

The setter 606 sets Ad and the destination address of the packet as a combination; and the first searcher 612 searches the IP/port utilization table 400 for a combination that matches the combination set by the setter 606. For example, based on the destination address of the packet, the first searcher 612 retrieves a relevant entry from the IP/port utilization table 400. For example, based on the sum of the destination address of the packet and Ad, the first searcher 612 retrieves the entry from the IP/port utilization table 400. In this example, A_E2 (which is indicated by next link 407 in the retrieved entry) is regarded as Ea.

The first determiner 607 determines whether the combination set by the setter 606 is among a series of combinations set before the current combination. Here, a series of combinations indicates address information entries in the IP/port utilization table 400 that are associated.

The first determiner 607 determines whether Ad (which is the global address) and the translation IP of Ea match, and whether dst IP 402 of Ea (which is the destination address of the current combination) matches. In this example, since Ad is GA3 and the translation IP 401 of A_E2 is GA3, Ad is determined to match the translation IP 401 of A_E2. On the other hand, since the destination address of the packet is GA1 and dst IP 402 is GA2, the destination address of the packet is determined to not be identical to dst IP 402. If any one is determined to not match, the first determiner 607 newly regards as Ea, the entry indicated by next link 407 of Ea and a pointer to Ea is entered for Laddr. In this example, it is determined by the first determiner 607 that there are no entries matching the combination.

When the first determiner 607 determines that there are no matching entries (next link 407 of Ea is null), the first list structure generator 608 newly generates an address information entry as Ean and adds the new address information entry to the IP/port utilization table 400.

The address translation device 100 selects an arbitrary global port number from among allocable global port numbers. The second determiner 609 determines whether the selected global port number is in a port usage entry having the combination (generated address information entry) set by the setter 606.

Here, since the address information entry has just been generated, the second determiner 609 determines that the selected global port number is not in any address information entry.

If the second determiner 609 determines that the selected global port number is not in the address information entry, the node generator 610 generates a port usage entry in which an arbitrary global port number from among allocable global port numbers is entered for port 408. Here, the node generator 610 generates a port usage entry as Eu_top (dummy entry), which is regarded as Eau.

The second list structure generator 611 associates the port usage entry generated by the node generator 610 with address information entries matching the set combination.

For example, the second list structure generator 611 performs association by setting the values below for the generated address information entry and port usage entry.
· port 408 of Eu_top: null
· previous link 409 of Eu_top: null
· next link 410 of Eu_top: pointer to Eau
· port 408 of Eau: smallest port value
· previous link 409 of Eau: pointer to Eu_top
· next link 410 of Eau: null
· translation IP 401 of Ean: Ad
· dst IP 402 of Ean: destination IP of packet
· next port 403 of Ean: smallest port value+1
· port usage entry link 404 of Ean: pointer to Eau
· port usage entry top link 405 of Ean: pointer to Eu_top
· previous link 406 of Ean: pointer to Ea
· next link 407 of Ean: null
· next link 407 of Ea: pointer to Ean

Here, although the smallest port value is set for port 408 of Eau, port 408 of the port usage entry indicated by the port usage entry link 404 of Ea may be set for port 408 of Eau. As a result, the same source global address and port can be allocated, enabling efficient address allocation to be facilitated. The value+1 of port 408 in the port usage entry indicated by the port usage entry link 404 of Ea is set for next port 403 of Ean.

Further, Pd and Lport are set for use in generating a NAT table entry.
· Pd=port of Eau
· Lport=pointer to Eau

The address translation device 100 generates as En and associates with the NAT search table 201 and the NAT search table 202, a NAT table entry. The address translation device 100 further generates a state management entry, as Est and adds the generated state management entry to the state management table 300.

The address translation device 100 sets En items and Est items as indicated below.
· private 203 source 210 IP 213 of En: source private address of packet
· private 203 source 210 port 214 of En: source private port of packet
· private 203 destination 211 IP 215 of En: destination address of packet
· private 203 destination 211 port 216 of En: destination port of packet
· global 204 source 212 IP 217 of En: Ad
· global 204 source 212 port 218 En: Pd
· state management entry link 205 of En: pointer to Est
· address information entry link 206 of En: Laddr
· port usage entry link 207 of En: Lport
· NAT entry link 301 of Est: En
· expire time 302 of Est: current time+expire time
· previous link 303 of Est: pointer to state management entry (top)
· next link 304 of Est: value of next link on state management entry (top)
· value of previous link 303 in entry indicated by next link 304 in state management entry (top): pointer to Est
· next link 304 of state management entry (top): pointer to Est

Expire time is a time preliminarily set by the user.

The address translation device 100, based on information concerning the source private address/port and destination address/port of the packet, retrieves a relevant hash entry from the NAT search table 201; and regards as Eprev, the entry indicated by a NAT table entry link in the retrieved hash entry. Here, Eprev is N1_E1. The entry indicated by the next link of Eprev is regarded as Enext. Here, Enext is N1_E2.

The address translation device 100 makes the settings below to add En to the NAT search table 201.
· next link (p→g) 209 of En: pointer to Enext
· previous link (p→g) 208 of En: pointer to Eprev
· next link (p→g) 209 of Eprev: pointer to En
· previous link (p→g) 208 of Enext: pointer to En

The address translation device 100, based on information concerning the source private address/port and destination address/port of the packet, retrieves a relevant hash entry from the NAT search table 202; and regards as Eprev, the entry indicated by a NAT table entry link in the hash entry. Here, Eprev is N2_E1. The entry indicated by the next link in Eprev is regarded as Enext. Here, Enext is N2_E2.

The address translation device 100 makes the settings below to add En to the NAT search table 202.
· next link (g→p) 220 of En: pointer to Enext
· previous link (g→p) 219 of En: pointer to Eprev
· next link (g→p) 220 of Eprev: pointer to En
· previous link (g→p) 219 of Enext: pointer to En

The translator 604 translates the source private address of the packet to IP 217 of En and translates the source private port of the packet to port 218 of En.

The transmitter 605 transmits the packet that has been translated by the translator 604. The transmitter 605 is a commonly known technology and therefore, detailed description will be omitted.

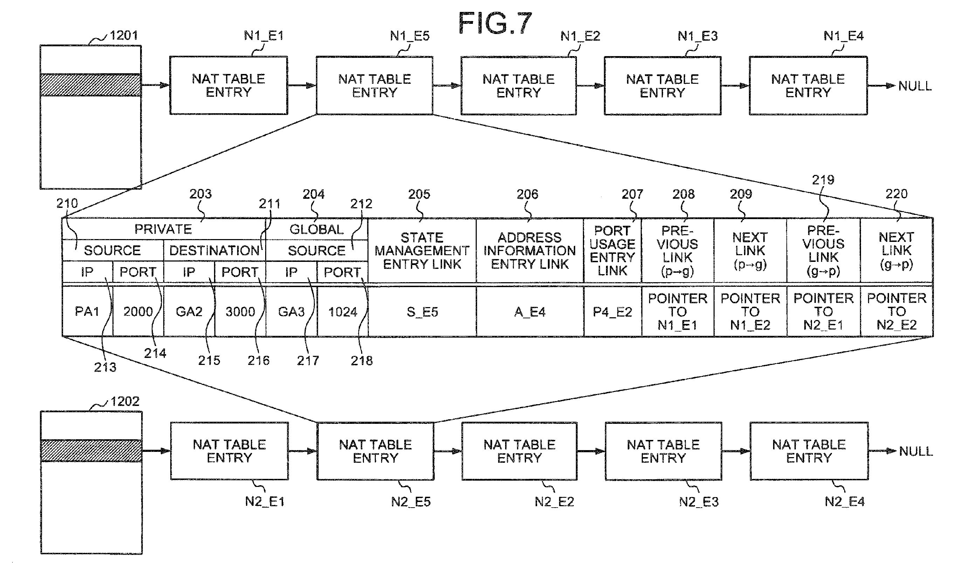

Thus, in this manner, a NAT table entry, a state management entry, an address information entry, and a port usage entry are newly added. FIGs. 7 to 9 depict examples of entry addition.

FIG. 7 is a diagram depicting the NAT search table after the entries in the first example have been added. An entry has been added as N1_E5 to a NAT search table 701. An entry has been added as N2_E5 to a NAT search table 702. In N1_E5 and N2_E5, IP 215 is GA2, port 216 is 3000, IP 217 is GA3, and port 218 is 1024. As described with reference to FIG. 2, for N1_E3, IP 215 is GA1, port 216 is 3000, IP 217 is GA3, and port 218 is 5000. Therefore, even with the transmission of different packets, if the destination addresses differ, the source private addresses can be translated to the same source global address.

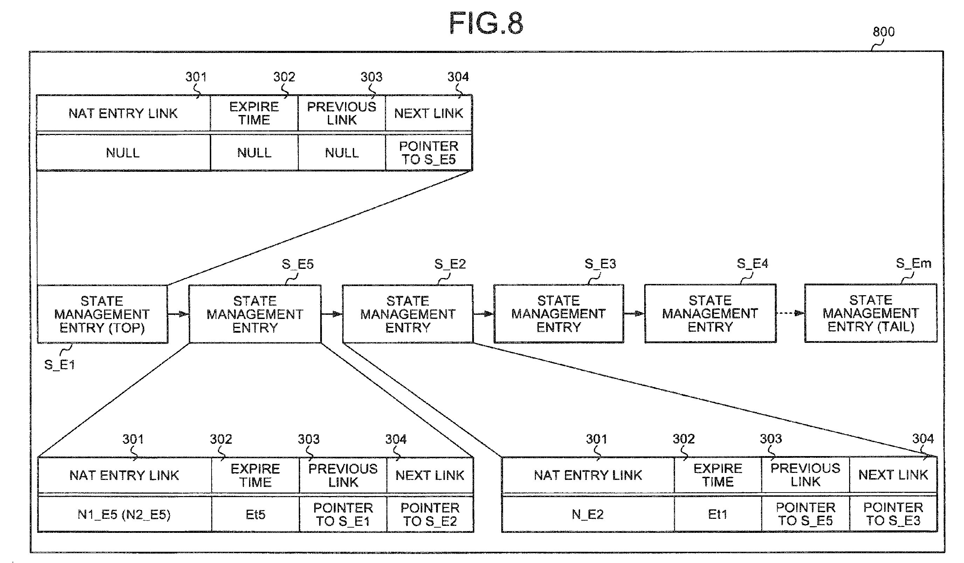

FIG. 8 is a diagram depicting the state management table after the entries in the first example have been added. In the state management table 800, S_E5 is newly added between S_E1 and S_E2. Accordingly, next link 304 of S_E1 is a pointer to S_E5, previous link 303 of S_E5 is a pointer to S_E1, next link 304 of S_E5 is a pointer to S_E2, and previous link 303 of S_E2 is a pointer to S_E5. Further, NAT entry link 301 of S_E5 indicates N1_E5(N2_E5) and is associated with the entries newly added to the NAT search table 701 (and the NAT search table 702).

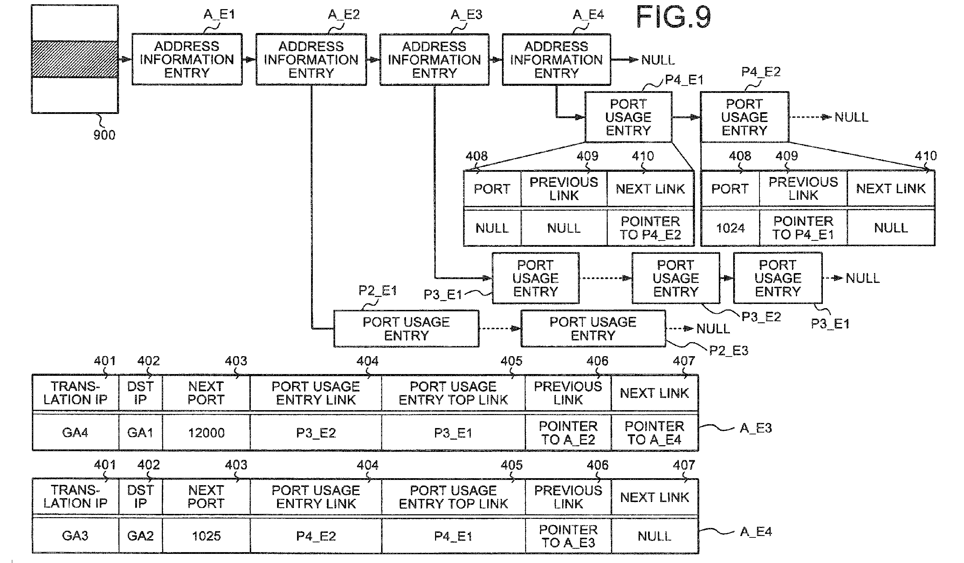

FIG. 9 is a diagram depicting the IP/port utilization table after the entries in the first example have been added. In the IP/port utilization table 900, A_E4 is newly added subsequent to A_E3, which is at the tail of the links. Consequently, next link 407 of A_E3 is a pointer to A_E4, previous link 406 of A_E4 is a pointer to A_E3, and next link 407 of A_E4 is null. For A_E4, next port 403 is 1025, port usage entry link 404 indicates P4_E2, and port usage entry top link 405 indicates P4_E1.

As depicted in FIG. 4, translation IP 401 of A_E2 is GA3 and dst IP 402 of A_E2 is GA1. Therefore, even for different packets, since at least the destination addresses differ, the source private addresses of the packets can be allocated the same source global address (GA3). Further, not just addresses, but ports are also simultaneously allocated, thereby enabling the quantity of global addresses used to be suppressed.

### (Second example)

In the second example, an example of source private address/port and source global address/port allocation when the source private address/port and destination address/port of different packets all respectively match is described. The second example is an example in which a packet having the address information indicated below is transmitted from a client on the LAN 101 to a server on the WAN 102.

· source private address: PA1
· source private port: 2000
· destination address: GA1
· destination port: 3000

In the second example, the NAT search table 201, the NAT search table 202, the state management table 300, and the IP/port utilization table 400 used in the first example will be used to describe processing in detail.

The processing by the receiver 601 and the information extractor 602 is identical to that in the first example and description thereof will be omitted herein.

The address translation device 100, based on the source private address/port and destination address/port information of the packet, retrieves a hash entry from the NAT search table 201. For example, the values of the source private address/port and destination address/port may be summed to retrieve the hash entry. In this example, N1_E1 is assumed to be retrieved and since N1_E1 is a dummy entry, N1_E2 is regarded as Es.

The address determiner 603, similar to the processing in the first example, determines whether the source private address of the packet and IP 213 of Es match, and whether the source private port of the packet and port 214 of Es match. The address determiner 603 further determines whether the destination address of the packet and IP 215 of Es match, and whether the destination port of the packet and port 216 of Es match. If any one is determined to not match by the determiner, the entry indicated by next link 209 of Es is regarded as Es and until all are determined to respectively match, the processing of the address determiner 603 is recursively performed.

In this example, for N1_E3, since IP 213 is PA1, port 214 is 2000, IP 215 is GA1, and port 216 is 3000, it is determined that these values respectively match the destination private address/port and destination address/port of the packet.

The address translation device 100, based on state management entry link 205 of Es, retrieves state management entry (Est_tmp). In this example, Est_tmp is S_E3.

The address translation device 100 resets Est_tmp items as indicated below.

· expire time 302 of Est_tmp: current time+expire time
· previous link 303 of entry indicated by next link 304 of Est_tmp: value of previous link 303 in Est_tmp
· next link 304 of entry indicated by previous link 303 of Est_tmp: value of next link 304 in Est_tmp
· previous link 303 of Est_tmp: pointer to state management entry (top)
· next link 304 of Est_tmp: next link 304 of state management entry (top)
· previous link 303 of entry indicated by next link 304 of state management entry (top): pointer to Est_tmp
· next link 304 of state management entry (top): pointer to Est_tmp

The translator 604, when all values are determined to respectively match by the address determiner 603, translates the destination private address of the packet to IP 217 of Es and translates the destination private port of the packet to port 218 of Es. For example, the destination private address of the packet is translated to GA3 and the destination private port of the packet is translated to 5000.

The transmitter 605 transmits the packet that has been translated by the translator 604.

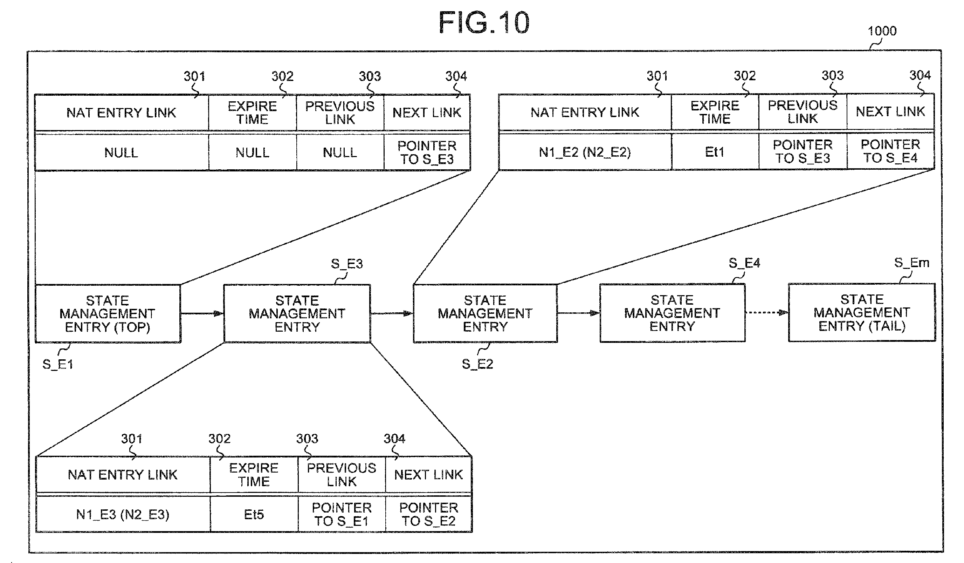

FIG. 10 is a diagram depicting the state management table after the settings in the second example. In a state management table 1000 and in the state management table 300, the state management entry indicated by previous link 303 of the state management entry (tail) is the entry having an expire time that is closest to the current time. Further, since the entries are arranged in order of expire time, S_E3, for which expire time 302 has just been reset, has an expire time that is farthest from the current time and accordingly, in the state management table 1000, S_E3, which is subsequent to the state management entry (top) (a dummy entry), is associated with the state management entry (top).

### (Third example)

The third example is an example in which the destination addresses of different packets are identical, but the destination port numbers thereof differ. In the third example, a case in which a packet having the address information indicated below is transmitted from a client on the LAN 101 to a server on the WAN 102 will be described.

· source private address: PA1
· source private port: 2002
· destination address: GA1
· destination port: 3005

The receiver 601 and the information extractor 602 execute processing identical to that in the first example and description thereof will be omitted herein.

The address translation device 100, similar to the first example, based on information concerning the source private address/port and destination address/port of the packet, retrieves a hash entry from the NAT search table 201. In this example, similar to the first example, N1_E1 is assumed to be retrieved and since N1_E1 is a dummy entry, the address translation device 100 regards N1_E2 as Es.

The address determiner 603, similar to the processing in the first example, determines whether the source private address and IP 213 of Es match, and whether the source private port and port 214 of Es match. The address determiner 603 further determines whether the destination address and IP 215 of Es match, and whether the destination port and port 216 of Es match. If any one is determined to not match by the address determiner 603, the entry indicated by next link 209 of Es is regarded as Es and until all are determined to respectively match, the processing of the address determiner 603 is recursively performed.

The address translation device 100, if the address determiner 603 determines that any one does not match and next link 209 of Es is null, selects an arbitrary address from among a global address group. The global address group is identical to the example described above. Here, for example, GA3 is selected and regarded as Ad.

The first searcher 612 sequentially searches the IP/port utilization table 400 for a combination that matches the destination address of the packet and Ad. For example, the IP/port utilization table 400 is searched for a relevant entry. Here, A_E2, which is indicated by next link 407 of the relevant entry, is regarded as Ea.

The first searcher 612, while determining whether Ad and translation IP of Ea match and whether the destination address of the packet and dst IP 402 of Ea match, sequentially searches for an address information entry. Here, since Ad is GA3 and translation IP 401 of A_E2 is GA3, matching is determined and since the destination address of the packet is GA1 and the dst IP 402 is GA2, matching is determined. Consequently, A_E2 is retrieved as the combination matching the destination address of the packet and Ad.

The second searcher 613 sequentially searches global port numbers that a series of nodes in a second list structure (represents list structure of port usage entries) of the combination (address information entry) retrieved by the first searcher 612 has; and among the global port number group, searches for available global port numbers. Here, the second searcher 613 can search for available global port numbers by referring to next port 403 of A_E2.

Since next port 403 of A_E2 is 0, no available port number is retrieved by the second searcher 613 and consequently, the address translation device 100 newly selects an unselected address from the global address group. Here, for example, GA4 is selected as Ad.

The processing of the first searcher 612 and the second searcher 613 is again performed. Here, concerning A_E2, since a search where translation IP 401 is GA3 has been performed, A_E3, which is indicated by next link 407 of A_E2, is regarded as Ea.

The first searcher 612 determines if Ad and translation IP 401 of Ea match and if the destination address of the packet and dst IP 402 of Ea match. Here, translation IP of A_E3 is GA4 and dst IP 402 of A_E3 is GA1 and consequently, Ad and the destination address of the packet are respectively determined to match translation IP and dst IP 402 of Ea.

Since next port 403 of A_E3 is 12000, the second searcher 613 searches for available global ports. Here, the port usage entry indicated by port usage entry link of Ea is regarded as Eu and Laddr is set with a pointer to Ea.

The setter 606 sets the destination address of the packet and Ad as a combination.

The node generator 610 generates a node having an available global port number. For example, the node generator 610 generates a port usage entry and sets the global port number for port 408.

The second list structure generator 611 associates the port usage entry generated by the node generator 610 with the tail of the bidirectional list of port usage entries, or based on the value of port 408 in the generated port usage entry and the global port number of a port usage entry preliminarily included in the bidirectional list, associates sequentially by number, the generated entries in the bidirectional list of port usage entries.

For example, the second list structure generator 611 generates port usage entry (Eun) and the address translation device 100 sets the generated port usage entry items as follows.

· port 408 of Eu: next port of Ea
· next link 410 of Eun: next link of Eu
· previous link 409 of Eun: pointer to Eu
· next link 410 of Eu: pointer to Eun

When next link 410 of Eun is null, the following is set.
· previous link 409 of entry indicated by next link 410 of Eun: pointer to Eun

Pd is defined as the port number after translation and Lport is defined as the link of the port usage entry.
· Pd: port of Eun
· link (Lport) of port usage entry: pointer to Eun

In the present embodiment, since port usage entry link is linked upstream of next port 403, the search position for searching for the next available port is indicated and searching from 1024 (top) is not necessary, enabling address translation processing to be expedited.

Re-retrieval of next port 403 of Ea will be described. Since the port is 12000, the second searcher 613 traces the list to retrieve an available port. For example, based on the value of next link 410 of port usage entries, the list is traced and for example, if the port 408 of the entry indicated by next link 410 of the entry having 12000 for the port 408 is 12003, 12001 and 12002 are available ports and for next port 403 of Ea, 12001 is retrieved as an available port number.

The address translation device 100, when no port is available, repeats searching until null is reached. In the present embodiment, since the ports are 1024 to 65000 and searching may consume some time, an upper limit of the number of trace searches is preliminarily set, thereby enabling increased speed of the address translation device 100.

The address translation device 100 generates a NAT table entry, adds the entry to the NAT search tables 201, 202, generates a state management entry and associates the entry with the state management table 300, however, the generation and association processing are identical to that in the first example and description is omitted.

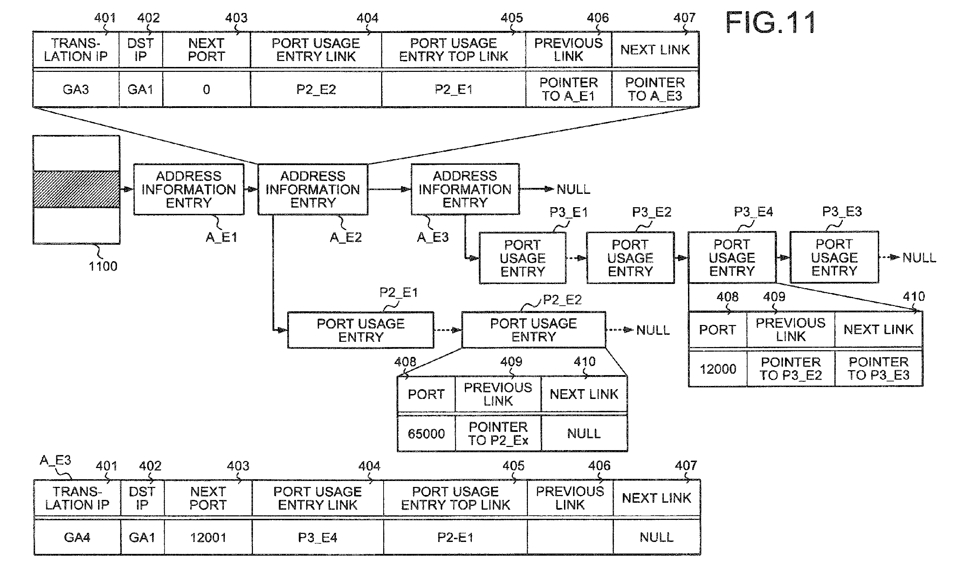

FIG. 11 is the IP/port utilization table after the entry addition in the third example. In an IP/port utilization table 1100, port usage entry link 404 of A_E3 is P3_E4 and next port 403 of A_E3 is set as 12001. Further, P3_E4 is added between P3_E2 and P3_E3. For P3_E4, port 408 of is 12000, previous link 409 is P3_E2, and next link 410 is P3_E3.

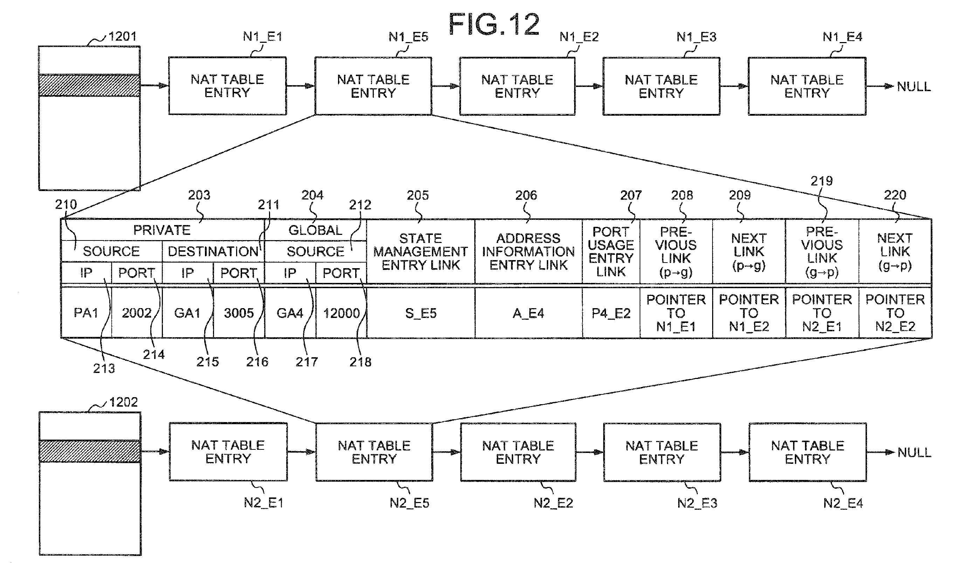

FIG. 12 is a diagram depicting the NAT search tables after the entry addition in the third example. In a NAT search table 1201, N1_E5 is added between N1_E1 and N1_E2; and in a NAT search table 1202, N2_E5 is added between N2_E1 and N2_E2.

IP 213 of N1_E5 is PA1, port 214 of N1_E5 is 2002, IP 215 of N1_E5 is GA1, and port 216 of N1_E5 is 3005. Further, for N1_E5, IP 217 is GA4, port 218 is 12000, state management entry link 205 is S_E5, and address information entry link 206 is A_E4. Port usage entry link 207 of N1_E5 is P4_E2.

The translator 604 translates PA1, which is the source private address of the packet, to GA4, which is IP 217 of N1_E5 and translates 2002, which is the source private port of the packet, to 12000, which is port 218 of N1_E5. The transmitter 605 transmits the packet after the translation by the translator 604.

In the first and the third examples, before address allocation, although an address information entry and a port usage entry are generated, generation may be after allocation. Here, an example of address information entry and port usage entry generation after allocation will be described.

The setter 606 sets as a combination, the destination address of a given packet to which a source global address has already been allocated and the source global address of a second packet.

The first determiner 607 determines if the combination set by the setter 606 is among a series of combinations set before the current combination. Here, the series of combinations has a bidirectional list structure in which address information entries are nodes (depicted in FIG. 4). For example, the first determiner 607 traces the address information entries in the bidirectional list structure and determines whether an identical combination is present.

The first list structure generator 608 associates with the tail of the first list structure associating a series of combinations, the combination that the first determiner 607 determines is not among the series of combinations. For example, the first list structure generator 608 generates an address information entry, sets translation IP 401 thereof to be the source global address of the given packet and sets dst IP 402 thereof to be the destination address of the given packet. Other items in the address information entry are set as described above.

Next, an example of generation of a port usage entry is described. The second determiner 609 determines whether among a series of nodes of the combination set by the setter 606, a node is present that has the source global port number of the given packet. For example, the second determiner 609 determines whether a port number is present that matches the source global port number of the given packet in the bidirectional list structure having as a node, the port usage entry of the address information entry having a combination matching the current combination.

A node generator 110, when the second determiner 609 determines that no node is present, generates a node having the source global port number of the given packet. For example, the node generator 110 generates a port usage entry, and sets the source global port number of the given packet for port 408 of the entry.

The second list structure generator 611 associates with the tail of the second list structure associating a series of nodes, the node generated by the node generator 110. For example, the second list structure generator 611 inserts in the tail entry of bidirectional list structure of the port usage entries, the port usage entry generated by the node generator 110. The setting of previous link 409 and next link 410 is identical to that described above and description thereof is omitted.

Thus, available port numbers can be easily retrieved for each destination address and source global address. Although conventionally, the destination address, source global address and port number were associated and stored to a storage device, by putting the port numbers in a bidirectional list structure, the number of storage devices used can be reduced.

### (Fourth example)

In the fourth example, a case where a packet is transmitted from a server (GA1) on the WAN 102 to a client (PA1) on the LAN 101 will be described.

Addresses appended to the packet are assumed to be as follows.
· source global address: GA1
· source global port: 3000
· destination global address: GA3
· destination global port: 1024

The receiver 601 receives a packet that is from a communication apparatus on a global network to a communication apparatus on a private network. For example, the I/F 508 receives the packet. Detailed description of the processing by the information extractor 602 will be omitted.

The address translation device 100, based on the source global address/port and destination global address/port, retrieves a hash entry from the NAT search table 702. Here, the retrieved hash entry is regarded as Es and the entry indicated by next link (g→p) 220 of Es is regarded as Es. In this example, Es is N2_E5.

The address determiner 603 determines whether the source global address and IP 215 of Es match; and whether the source global port and port 216 of Es match. The address determiner 603 further determines whether the destination global address and IP 217 of Es match; and whether the destination global port and port 218 of Es match. Here, if it is determined that all do not respectively match, the entry indicated by next link (g→p) 220 of Es is regarded as Es and the processing of the address determiner 603 is recursively performed until all respectively match or next link (g→p) 220 of Es is null.

Concerning N2_E5, IP 215 of Es is GA2, port 216 of Es is 3000, IP 217 of Es is GA3, and port 218 of Es is 1024. Accordingly, the address determiner 603 determines that all respectively match.

The translator 604, when the address determiner 603 determines that all respectively match, translates the destination global address to IP 217 of Es, and translates the destination global port to port 218 of Es. The transmitter 605 transmits the packet after the translation by the translator 604.

Addresses appended to the packet are assumed to be as follows.
· source global address: GA1
· source global port: 3000
· destination global address: GA5
· destination global port: 3000

Processing of the receiver 601 and the information extractor 602 is identical to that described above and description is omitted.

The address determiner 603, as described above, determines whether the source global address and IP 215 of Es match; and whether the source global port and port 216 of Es match. The address determiner 603 further determines whether the destination global address and IP 217 of Es match; and whether the destination global port and port 218 of Es match. Although here, Es is N2_E5, since the addresses and ports do not respectively match, N2_E2 is regarded as Es based on next link (g→p) 220 of N2_E5 and the processing of the address determiner 603 is performed.

When the NAT table entries are traced and no matching NAT table entry is present and next link (g→p) 220 of Es is null, the address translation device 100 discards the packet.

As are result, only the communication apparatus on the WAN 102 having a connection from the communication apparatus on the LAN 101 can transmit packets to the communication apparatus on the LAN 101.

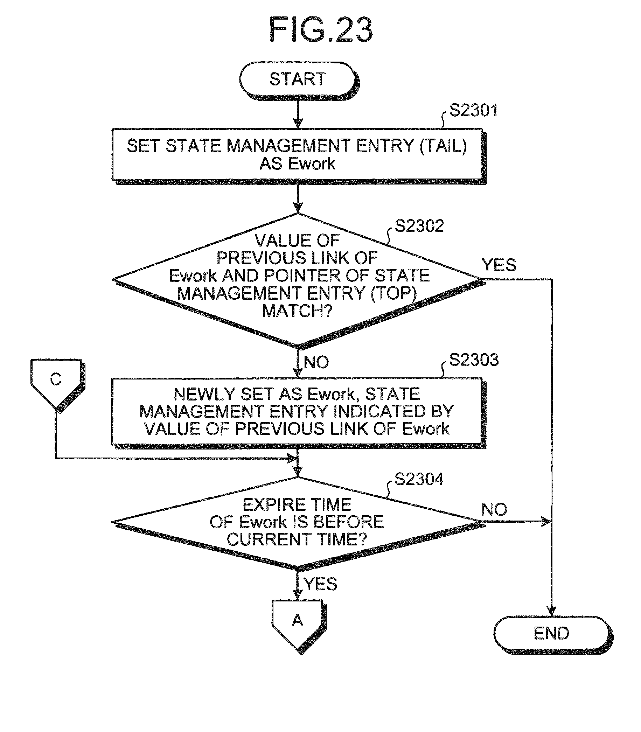

In the state management entry, since expire time 302 is set, the address translation device has to delete state management entries having times set that are before the current time. Deletion processing will be described hereinafter with reference to flowcharts depicted in FIGs. 23 to 25.

### (Address translation processing)

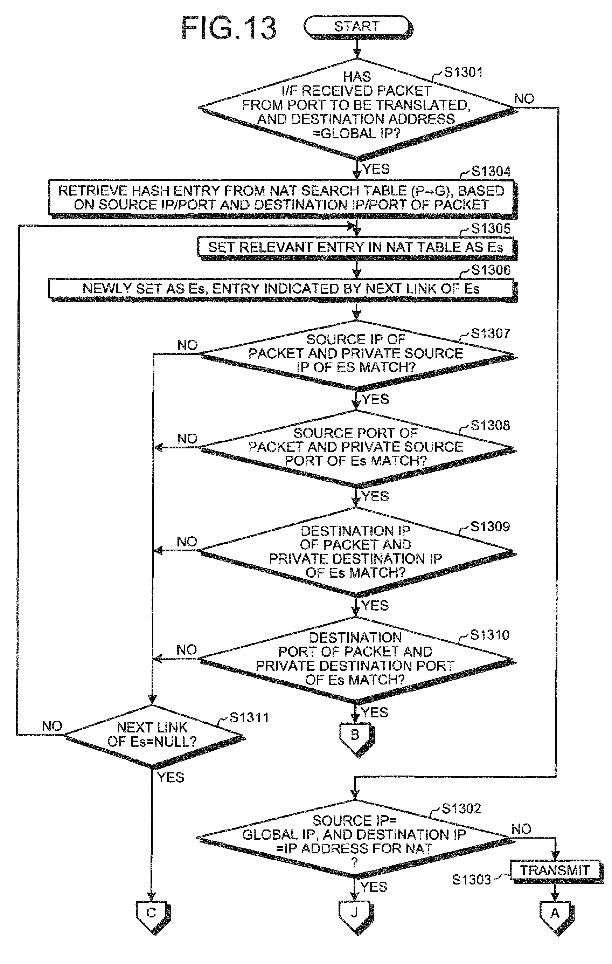

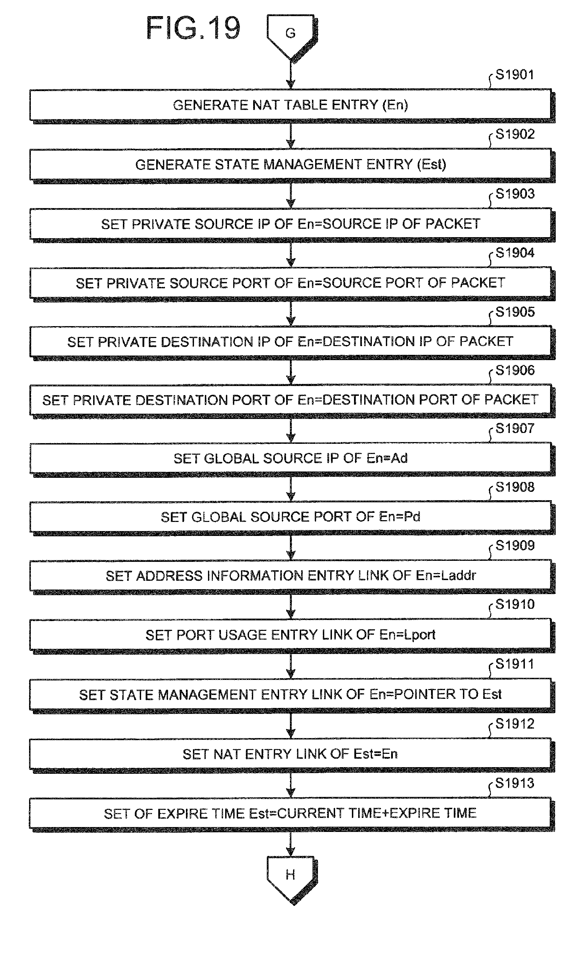

FIGs. 13 to 22 are flowcharts of address translation processing by the address translation device. All of the steps in the flowcharts are processing performed by the address translation device 100. The receiver 601 receives a packet; the reception interface at the time of reception determines whether the packet is received from a port that is to be subject to NAT and whether the destination IP is a global IP (step S1301).

If the reception interface determines that the packet is received from a port to be subject to NAT and the destination IP is a global IP (step S1301: YES), based on information concerning the source IP/port and destination IP/port of the packet, the address translation device 100 retrieves a hash entry from NAT search table (p→g) (step S1304). Here, "/" in "source IP/port" for the packet represents "and"; "/" in destination IP/port hereinafter represents "and". The NAT search table (p→g), for example, is the NAT search table 201.

The relevant entry in the NAT table is set as Es (step S1305), and the entry indicated by next link of Es is newly set as Es (step S1306). The address determiner 603 determines whether the source IP of the packet and the private source IP of Es match (step S1307).

If the source IPs match (step S1307: YES), the address determiner 603 determines whether the source port of the packet and the private source port of Es match (step S1308).

If the source ports match (step S1308: YES), the address determiner 603 determines whether the destination IP of the packet and the private destination IP of Es match (step S1309). If that the destination IPs match (step S1309: YES), the address determiner 603 determines whether the destination port of the packet and the private destination port of Es match (step S1310).

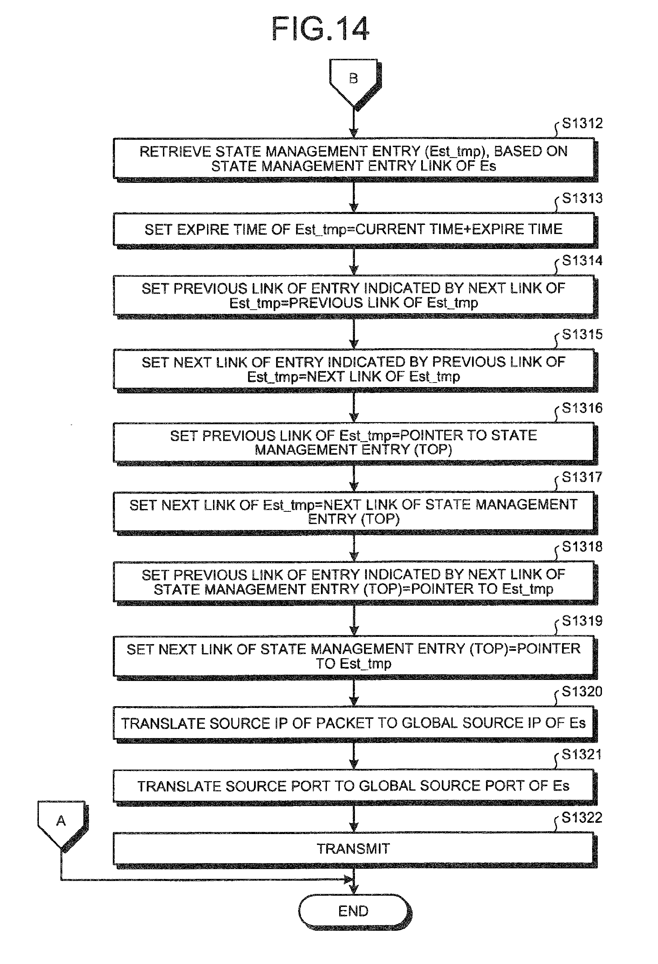

If the destination ports match (step S1310: YES), the address translation device 100 transitions to the processing depicted in FIG. 14 and based on the state management entry link of Es, retrieves a state management entry (Est_tmp) (step S1312). The address translation device 100 sets the expire time of Est_tmp=current time+expire time (step S1313) and sets the previous link of the entry indicated by the next link of Est_tmp=the previous link of Est_tmp (step S1314).

The address translation device 100 sets the next link of the entry indicated by the previous link of Est_tmp=the next link of Est_tmp (step S1315). The address translation device 100 further sets the previous link of Est_tmp=a pointer to the state management entry (top) (step S1316) and sets the next link of Est_tmp=the next link of the state management entry (top) (step S1317). The address translation device 100 sets the previous link of the entry indicated by the next link of the state management entry (top)=a pointer to Est_tmp (step S1318) and sets the next link of the state management entry (top)=a pointer to Est_tmp (step S1319).

The translator 604 translates the source IP of the packet to the global source IP of Es (step S1320). The translator 604 translates the source port to the global source port of Es (step S1321), and transmits the packet after translation (step S1322). By steps S1312 to S1319, the state management entry link is reset.

Meanwhile, if the determination at any one of steps S1307 to S1310 is of no matching (step S1307, S1308, S1309, S1310: NO), the address translation device 100 determines whether the next link of Es is null (step S1311). If the next link of Es is not null (step S1311: NO), the address translation device 100 returns to step S1306.

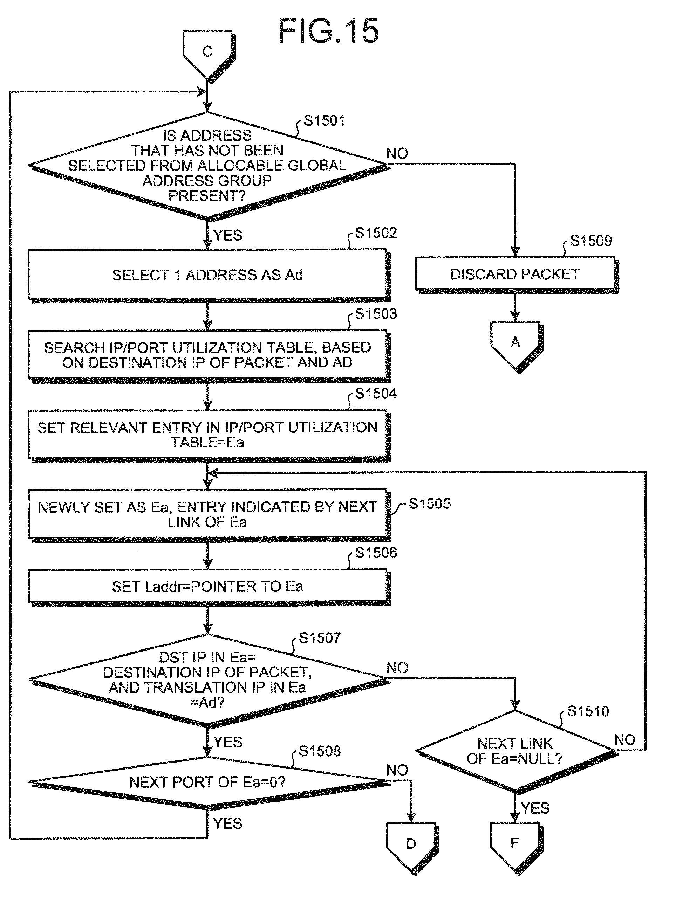

If the next link of Es is null (step S1311: YES), the address translation device 100 transitions to the processing depicted in FIG. 15 and determines whether an address is present that has not been selected from an allocable global address group (step S1501). If an address is present that has not been selected from the global address group (step S1501: YES), the address translation device 100 selects from among the addresses that have not been selected, 1 address as Ad (step S1502).

The setter 606 sets the destination IP of the packet and Ad as a combination; the first searcher 612, based on the destination IP of the packet and Ad of the combination, searches the IP/port utilization table (step S1503). The address translation device 100 sets the relevant entry in IP/port utilization table as Ea (step S1504) and sets as Ea, the entry indicated by the next link of Ea (step S1505).

The address translation device 100 sets Laddr=a pointer to Ea (step S1506). The first determiner 607 determines whether the dst IP in Ea=the destination IP of the packet and whether the translation IP in Ea=Ad (step S1507). If the dst IP in Ea=the destination IP of the packet and the translation IP in Ea=Ad (step S1507: YES), the second searcher 613 determines whether the next port of Ea is 0 (step S1508).

If the next port of Ea is 0 (step S1508: YES), the address translation device 100 returns to step S1501. Here, a case where the next port of Ea is 0 indicates that among the global port group for the global address selected as Ad, no available global port number is present.

At step S1501, if an address that has not be selected from the global address group is not present (step S1501: NO), the address translation device 100 discards the packet (step S1509), ending the processing. In this case, all of the global addresses and port numbers have been allocated and thus, the packet is discarded.

At step S1507, if the dst IP in Ea=the destination IP of the packet is not true or if the translation IP in Ea=Ad is not true (step S1507: NO), the address translation device 100 determines whether the next link of Ea is null (step S1510). If the next link of Ea is not null (step S1510: NO), the address translation device 100 returns to step S1505.

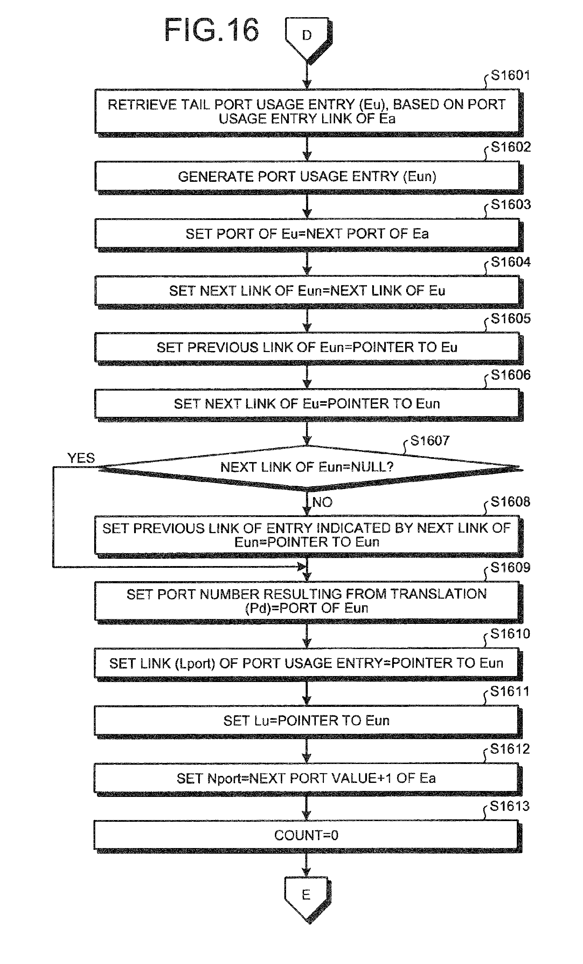

On the other hand, if the next port of Ea is not 0 (step S1508: NO), the address translation device 100 transitions to the processing depicted in FIG. 16, and based on the port usage entry link of Ea, retrieves the tail port usage entry (Eu) (step S1601). The node generator 610 generates a port usage entry (Eun) (step S1602). The node generator 610 sets the port of Eu=the next port of Ea (step S1603).

The second list structure generator 611 sets the next link of Eun=the next link of Eu (step S1604). The second list structure generator 611 sets the previous link of Eun=a pointer to Eu (step S1605). The second list structure generator 611 further sets the next link of Eu=a pointer to Eun (step S1606).

The address translation device 100 determines whether the next link of Eun is null (step S1607). If the next link of Eun is null (step S1607: NO), the address translation device 100 sets the previous link of the entry indicated by the next link of Eun=a pointer to Eun (step S1608), and sets the port number resulting from translation (Pd)=the port of Eun (step S1609).

If the next link of Eun is null (step S1607: YES), the address translation device 100 transitions to step S1609. Subsequent to step S1609, the address translation device 100 sets the link (Lport) of the port usage entry=a pointer to Eun (step S1610) and sets Lu=a pointer to Eun (step S1611). The address translation device 100 further sets Nport=next port value+1 of Ea (step S1612) and sets COURT=0 (step S1613).

Here, COUNT will be described. COUNT is a variable for counting the number of port usage entries searched by the address translation device 100. Since the number of global port numbers for an allocable global address is high, when the address translation device 100 searches for available global port numbers, if all of the port usage entries are searched, the amount of time consumed for the search becomes huge. Thus, concerning the preliminary setting of a search upper limit (in the present address translation processing, the maximum count) and port usage entries equal to or less than the upper limit, although searches are performed, the search time can be reduced by newly allocating a global address when the upper limit is exceeded.

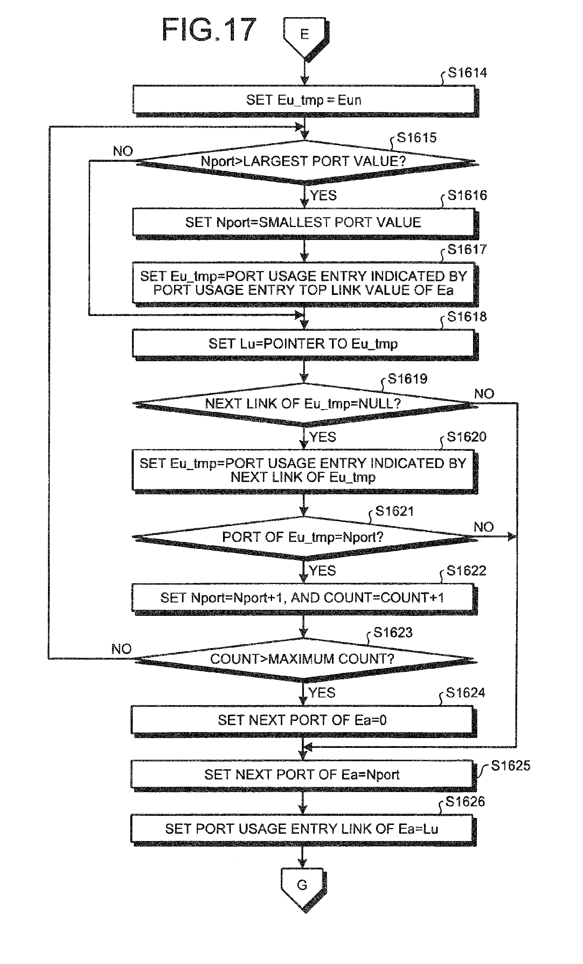

Subsequent to step S1613, the address translation device 100 transitions to the processing depicted in FIG. 17, sets Eu_tmp=Eun (step S1614), and determines whether Nport>the largest port value (step S1615). If Nport>the largest port value is true (step S1615: YES), the address translation device 100 sets Nport=the smallest port value (step S1616).

The address translation device 100 sets Eu_tmp=the port usage entry indicated by the port usage entry top link value of Ea (step S1617), and sets Lu=a pointer to Eu_tmp (step S1618). If Nport>the largest port value is not true (step S1615: NO), the address translation device 100 transitions to step S1618.

Subsequent to step S1618, the address translation device 100 determines whether the next link of Eu_tmp is null (step S1619). If the next link of Eu_tmp is null (step S1619: YES), the address translation device 100 sets Eu_tmp for the port usage entry indicated by the next link of Eu_tmp (step S1620).

The address translation device 100 determines whether the port of Eu_tmp is Nport (step S1621). If the port of Eu_tmp is Nport (step S1621: YES), the address translation device 100 sets Nport=Nport+1 and COUNT=COUNT+1 (step S1622). The address translation device 100 determines whether COUNT>the maximum count is true (step S1623) and if COUNT>the maximum count is not true (step S1623: NO), returns to step S1615.

On the other hand, if COUNT>the maximum count is true (step S1623: YES), the address translation device 100 sets the next port of Ea=0 (step S1624).

Subsequent to step S1624, the address translation device 100 sets the next port of Ea=Nport (step S1625), sets the port usage entry link of Ea=Lu (step S1626), and transitions to step S1901. The processing at step S1901 will be described hereinafter.

If the next link of Eu_tmp is not null (step S1619: NO) or if the port of Eu_tmp is not Nport (step S1621: NO), the address translation device 100 transitions to step S1625.

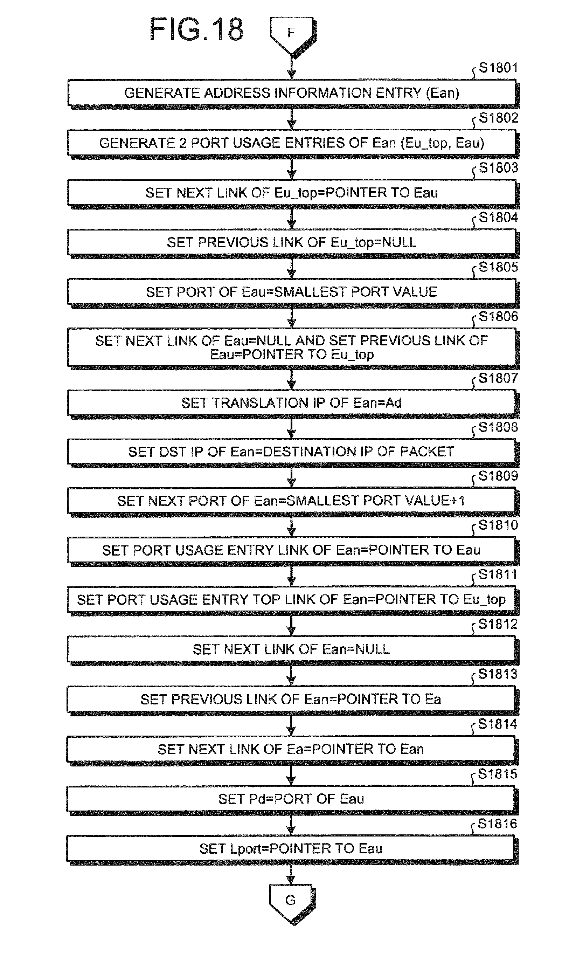

At step S1510 depicted in FIG. 15, if the next link of Ea is null (step S1510: YES), the address translation device 100 transitions to the processing depicted in FIG. 18, and generates an address information entry (Ean) (step S1801). The address translation device 100 generates 2 port usage entries of Ean (Eu_top, Eau) (step S1802), sets the next link of Eu_top=a pointer to Eau (step S1803), and sets the previous link of Eu_top=null (step S1804).

The address translation device 100 sets the port of Eau=the smallest port value (step S1805), sets the next link of Eau=null and sets the previous link of Eau=a pointer to Eu_top (step S1806), and sets the translation IP of Ean=Ad (step S1807).

The address translation device 100 sets the dst IP of Ean=the destination IP of the packet (step S1808), sets the next port of Ean=the smallest port value+1 (step S1809), and sets the port usage entry link of Ean=a pointer to Eau (step S1810). The address translation device 100 sets the port usage entry top link of Ean=a pointer to Eu_top (step S1811), sets the next link of Ean=null (step S1812), and sets the previous link of Ean=a pointer to Ea (step S1813).

The address translation device 100 sets the next link of Ea=a pointer to Ean (step S1814), sets Pd=the port of Eau (step S1815), and sets Lport=a pointer to Eau (step S1816).

Subsequent to step S1626 or step S1816, the address translation device 100 generates a NAT table entry (En) (step S1901) and generates a state management entry (Est) (step S1902). The address translation device 100 sets the private source IP of En=the source IP of the packet (step S1903). The address translation device 100 sets the private source port of En=the source port of the packet (step S1904) and sets the private destination IP of En=the destination IP of the packet (step S1905).

The address translation device 100 sets the private destination port of En=the destination port of the packet (step S1906), sets the global source IP of En=Ad (step S1907), and sets the global source port of En=Pd (step S1908).

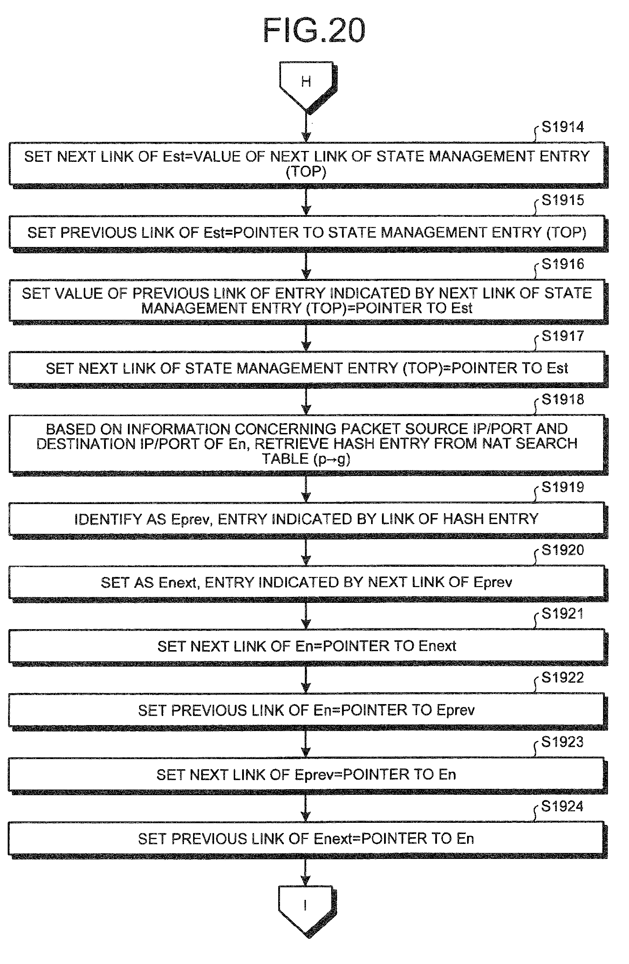

The address translation device 100 sets the address information entry link of En=Laddr (step S1909), sets the port usage entry link of En=Lport (step S1910), sets the state management entry link of En=a pointer to Est (step S1911). The address translation device 100 sets the NAT entry link of Est=En (step S1912), sets the expire time of Est=the current time+expire time (step S1913), transitions to the processing depicted in FIG. 20, and sets the next link of Est=the value of the next link of the state management entry (top) (step S1914).

The address translation device 100 sets the previous link of Est=a pointer to state management entry (top) (step S1915), and sets the value of the previous link of the entry indicated by the next link of the state management entry (top)=a pointer to Est (step s1916).

The address translation device 100 sets the next link of the state management entry (top)=a pointer to Est (step S1917); and based on information concerning the packet source IP/port and destination IP/port of En, retrieves a hash entry from the NAT search table (p→g) (step S1918). The address translation device 100 identifies as Eprev, the entry indicated by the link of the hash entry (step S1919) and sets as Enext, the entry indicated by the next link of Eprev (step S1920).

The address translation device 100 sets the next link of En=a pointer to Enext (step S1921), sets the previous link of En=a pointer to Eprev (step S1922), sets the next link of Eprev=a pointer to En (step S1923), and sets the previous link of Enext=a pointer to En (step S1924).

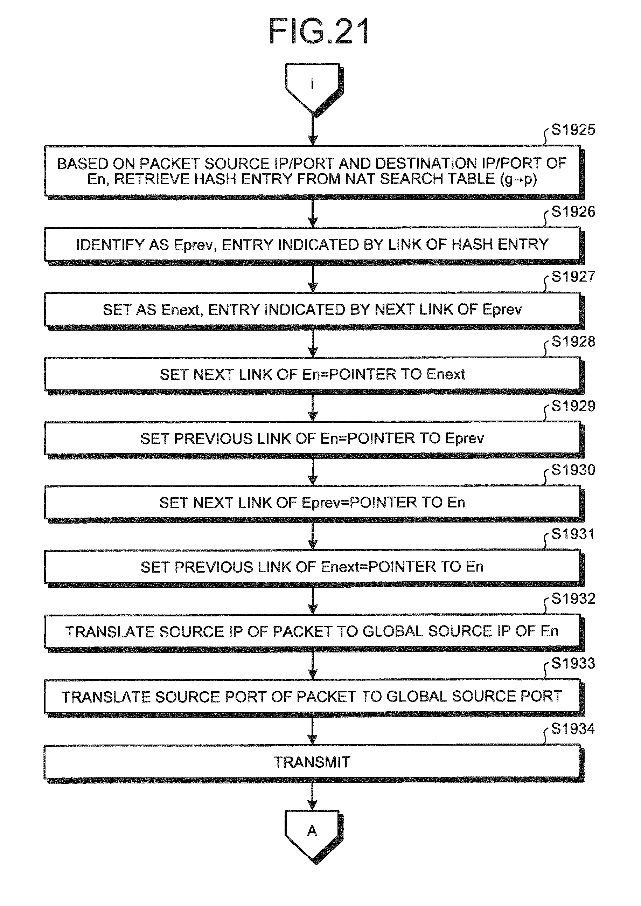

Subsequent to step S1924, the address translation device 100 transitions to the processing depicted in FIG. 21 and based on the packet source IP/port and destination IP/port of En, retrieves a hash entry from the NAT search table (g→p) (step S1925). The address translation device 100 identifies as Eprev, the entry indicated by the link of the hash entry (step S1926) and sets as Enext, the entry indicated by the next link of Eprev (step S1927). The address translation device 100 sets the next link of En=a pointer to Enext (step S1928), sets the previous link of En=a pointer to Eprev (step S1929), and sets the next link of Eprev=a pointer to En (step S1930).

The address translation device 100 sets the previous link of Enext=a pointer to En (step S1931) and translates the source IP of the packet to the global source IP of En (step S1932). The address translation device 100 translates the source port of the packet to the global source port (step S1933) and after the translation, transmits the packet (step S1934), ending the processing.

At step S1301 depicted in FIG. 13, if the reception interface did not receive the packet from a port that is to be subject to NAT or if the destination IP is not the global IP (step S1301: NO), the address translation device 100 determines whether the source IP is a global IP and whether the destination IP is an IP address for NAT (step S1302).

If the source IP is not a global IP or if the destination IP is not an IP address for NAT (step S1302: NO), the address translation device 100 transmits the packet (step S1303), ending the processing. This case indicates that the packet received by the address translation device 100 is a packet communicated on the private network and accordingly, since address translation is not necessary, the packet is transmitted without being subject to translation.

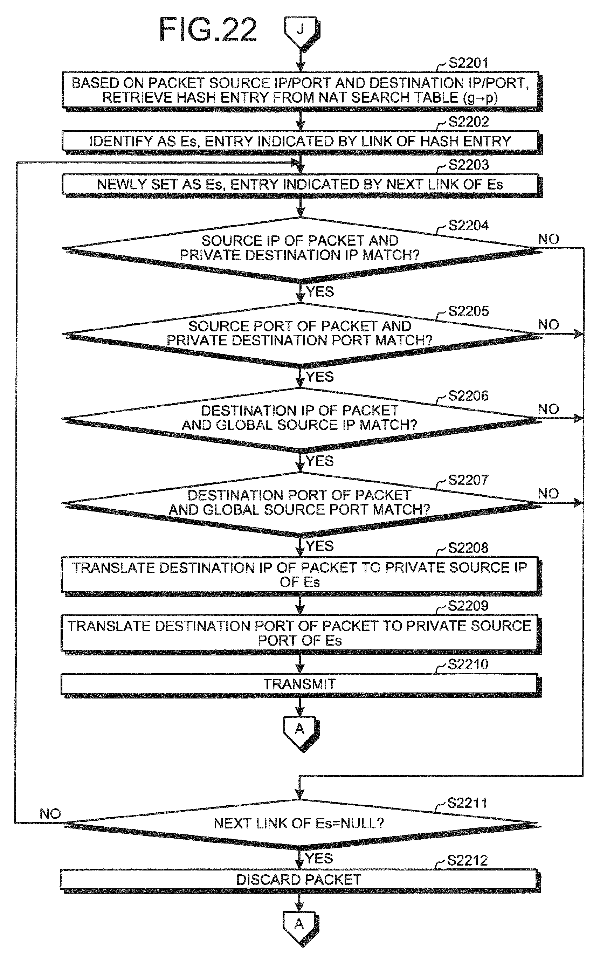

On the other hand if the source IP is a global IP and the destination IP is an IP address for NAT (step S1302: YES), the address translation device 100 transitions to the processing depicted in FIG. 22. Based on the packet source IP/port and destination IP/port, the address translation device 100 retrieves a hash entry from the NAT search table (g→p) (step S2201). The address translation device 100 identifies as Es, the entry indicated by the link of the hash entry (step S2202) and newly sets as Es, the entry indicated by the next link of Es (step S2203).

The address translation device 100 determines whether the source IP of the packet and the private destination IP match (step S2204). If the source IP of the packet and the private destination IP match (step S2204: YES), the address translation device 100 determines whether the source port of the packet and the private destination port match (step S2205). If the ports match (step S2205: YES), the address translation device 100 determines whether the destination IP of the packet and the global source IP match (step S2206).

If the destination IP of the packet and the global source IP match (step S2206: YES), the address translation device 100 determines whether the destination port of the packet and the global source port match (step S2207). If the ports match (step S2207: YES), the address translation device 100 translates the destination IP of the packet to the private source IP of Es (step S2208) and translates the destination port of the packet to the private source port of Es (step S2209). The address translation device 100 transmits the packet after the translation (step S2210), ending the processing.

If the determination at any one of steps S2204 to S2207 is of no matching (steps S2204, S2205, S2206, S2207: NO), the address translation device 100 determines whether the next link of Es is null (step S2211). If the next link of Es is not null (step S2211: NO), the address translation device 100 returns to step S2203. On the other hand, if the next link of Es is null (step S2211: YES), the address translation device 100 discards the packet (step S2212), ending the processing.

FIGs. 23 to 25 are flowcharts of entry deletion processing by the address translation device. All of the steps in the flowcharts are processing performed by the address translation device 100. The address translation device 100 sets the state management entry (tail) as Ework (step S2301) and determines whether the value of the previous link of Ework and the pointer of the state management entry (top) match (step S2302), and if not (step S2302: NO), the address translation device 100 newly sets as Ework, the state management entry indicated by the value of the previous link of Ework (step S2303).

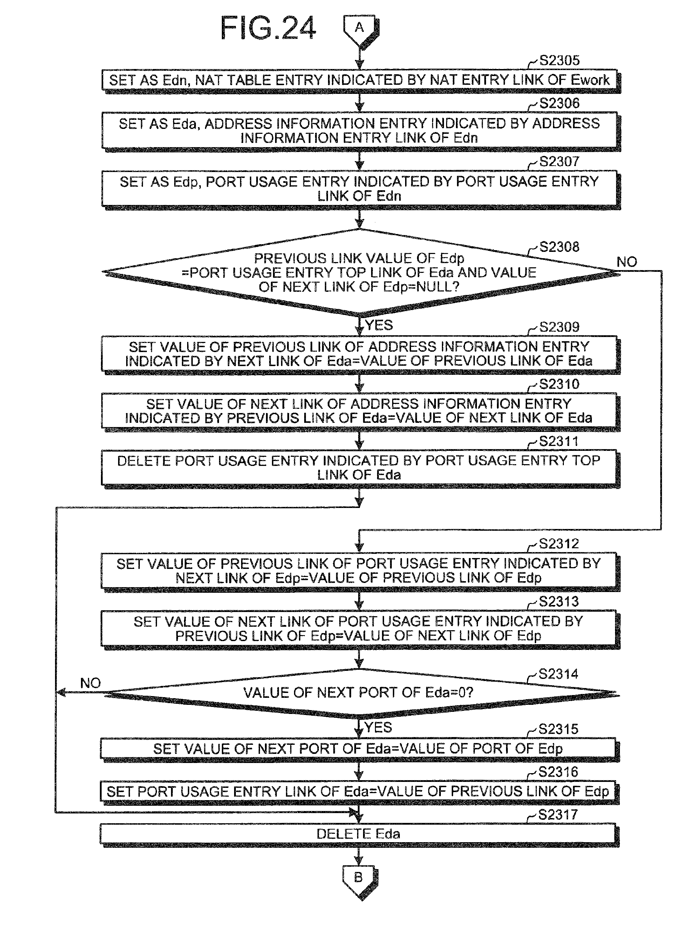

The address translation device 100 determines whether the expire time of Ework is before the current time (step S2304). If the expire time is before (step S2304: YES), the address translation device 100 transitions to the processing depicted in FIG. 24 and sets as Edn, the NAT table entry indicated by the NAT entry link of Ework (step S2305). The address translation device 100 sets as Eda, the address information entry indicated by the address information entry link of Edn (step S2306) and sets as Edp, the port usage entry indicated by the port usage entry link of Edn (step S2307).

The address translation device 100 determines whether the previous link value of Edp is the port usage entry top link of Eda and whether the value of the next link of Edp is null (step S2308). If the previous link value of Edp is the port usage entry top link of Eda and the next link value of Edp is null (step S2308: YES), the address translation device 100 sets the value of the previous link of the address information entry indicated by the next link of Eda=the value of the previous link of Eda (step S2309).

The address translation device 100 sets the value of the next link of the address information entry indicated by the previous link of Eda=the value of the next link of Eda (step S2310). The address translation device 100 deletes the port usage entry indicated by the port usage entry top link of Eda (step S2311) and transitions to step S2317.

If the previous link value of Edp is not the port usage entry top link of Eda or if next link value of Edp is not null (step S2308: NO), the address translation device 100 sets the value of the previous link of the port usage entry indicated by the next link of Edp=the value of the previous link of Edp (step S2312). The address translation device 100 sets the value of the next link of the port usage entry indicated by the previous link of Edp=the value of the next link of Edp (step S2313). The address translation device 100 determines whether the value of the next port of Eda is 0 (step S2314) and if the value is 0 (step S2314: YES), the address translation device 100 sets the value of the next port of Eda=the value of the port of Edp (step S2315).

The address translation device 100 sets the port usage entry link of Eda=the value of the previous link of Edp (step S2316) and deletes Eda (step S2317). At step S2314, if the value is not 0 (step S2314: NO), the address translation device 100 transitions to step S2317. Thus, when the address translation device 100 deletes a port usage entry, the port number of the deleted entry is set as the next port in the address information entry having the port usage entry, thereby enabling the time consumed for searching for available port numbers to be reduced.

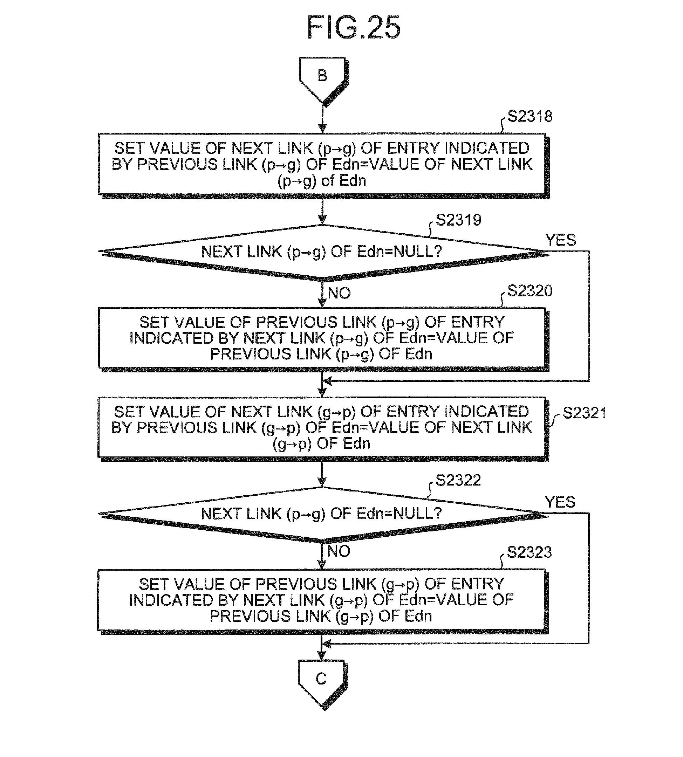

Subsequent to step S2317, the address translation device 100 transitions to the processing depicted in FIG. 25 and sets the value of the next link (p→g) of the entry indicated by the previous link (p→g) of Edn=the value of the next link (p→g) of Edn (step S2318). The address translation device 100 determines whether the next link (p→g) of Edn is null (step S2319).

If the next link (p→g) of Edn is not null (step S2319: NO), the address translation device 100 sets the value of the previous link (p→g) of the entry indicated by the next link (p→g) of Edn=the value of the previous link (p→g) of Edn (step S2320). The address translation device 100 sets the value of the next link (g→p) of the entry indicated by the previous link (g→p) of Edn=the value of the next link (g→p) of Edn (step S2321).

On the other hand, if the value of the next link (p→g) of Edn is null (step S2319: YES), the address translation device 100 transitions to step S2321.

Subsequent to step S2321, the address translation device 100 determines whether the next link (p→g) of Edn is null (step S2322). If the next link (p→g) of Edn is not null (step S2322: NO), the address translation device 100 sets the value of the previous link (g→p) of the entry indicated by the next link (g→p) of Edn=the value of the previous link (g→p) of Edn(step S2323) and returns to step S2304. On the other hand, if the next link (p→g) of Edn is null (step S2322: YES), the address translation device 100 returns to step S2304.

At step S2302, if the value of the previous link of Ework and the pointer of the state management entry (top) match (step S2302: YES), the address translation device 100 ends the processing. At step S2304, if the expire time of Ework is not before the current time (step S2304: NO), the address translation device 100 ends the processing.

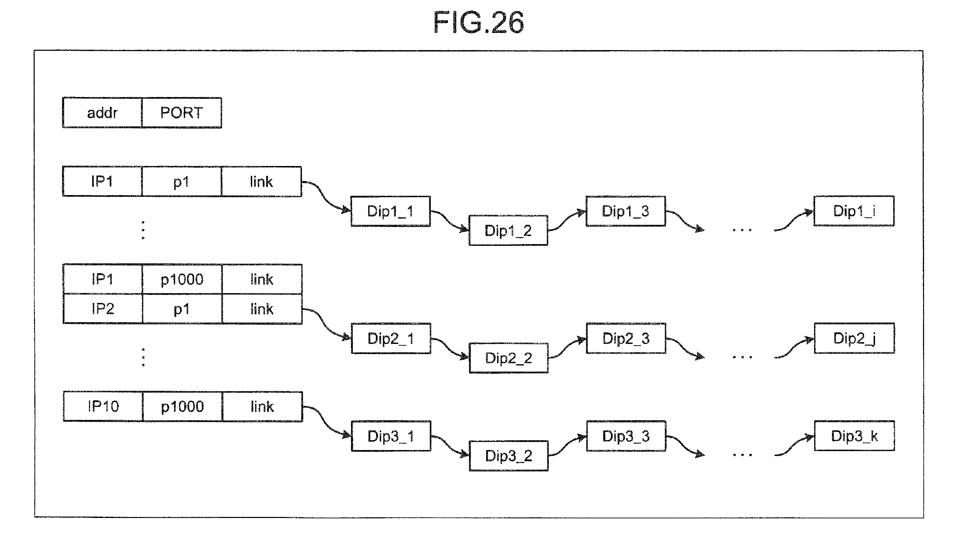

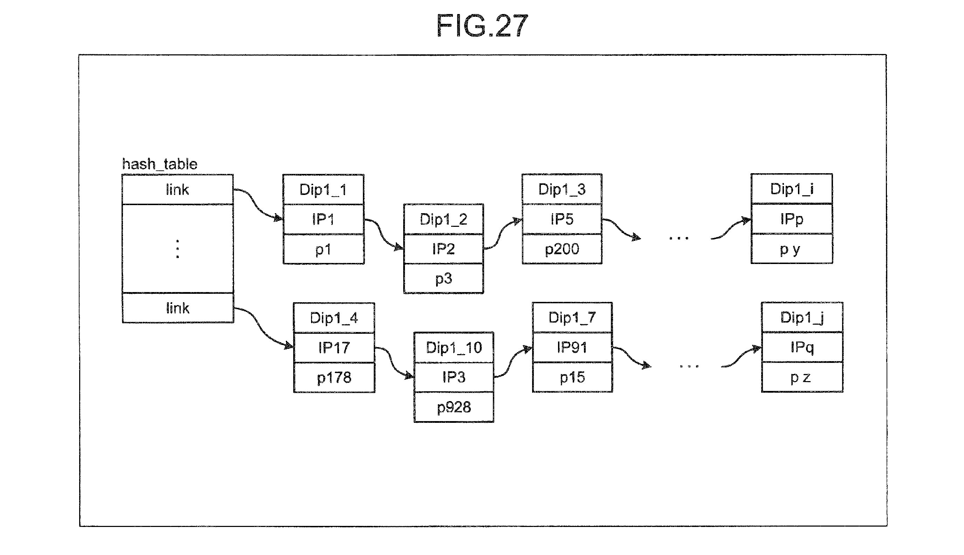

In the present embodiment, although a configuration in which a list structure using a NAT search table, a state management table, and an IP/port utilization table is used, configuration is not limited hereto provided that global address allocation can be performed according to whether the destination addresses differ. Examples are depicted in FIGs. 26 and 27.

FIG. 26 is a diagram of a first example of another list structure. In FIG. 26, addr is an address that can be allocated for address translation and destination addresses (Dip*_*("*" is a number)) are associated with each combination of addr and port. For example, when addr is IP1 and port is p1, the destination addresses Dip1_1, Dip1_2, ... Dip1_i are associated. As a result, if at least the destination addresses differ, the same source global address and port can be allocated.

FIG. 27 is a diagram of a second example of another list structure. In FIG. 27, hash_table is a hash table, and by using the destination address and the source global address/port, the hash value is derived. A list structure is formed where for each destination address (Dip*_* ("*" is a number)), a source global address (IP) and port (py, pz) are associated.

The address translation device 100 determines the source global address and port; and from the hash_table, searches whether the destination address and the combination of the source global address and port are present. If the destination address and the combination of the source global address and port are not found, the address translation device 100 uses the determined combination of source global address and port to perform address translation, whereby if at least the destination addresses differ, the same source global address and port can be allocated.

As described, according to the address translation device, the address translation method, and the address translation program, when the destination address of a received first packet and the destination address of a second packet that has already been allocated a source global address differ, the source private address of the first packet is allocated the source global address of the second packet. As a result efficient global address allocation can be facilitated and the number of global addresses used can be reduced.

The same global port is further allocated to 2 packets for which at least the destinations thereof differ. As a result, efficient global address and global port number allocation can be facilitated and the number of global addresses used can be reduced.

If the destination address/port number and the source private address/port number of 2 different packets respectively match, the same global address and the same port number are allocated. As a result, efficient global address allocation can be facilitated.

If the destination address of a first packet and the destination address of a second packet match, and at least one other aspect of address information differ, the first and the second packets are allocated the same global address and respectively different port numbers.

Each combination of the source global address and the destination of packets already subject to allocation is retained as a first list structure and the respective port numbers allocated to the combinations are retained as a second list structure. As a result, searches for available port numbers can be expedited and memory resources can be reduced.

By associating the nodes of the second list structure in the sequence of port number, port number searches can be simplified and expedited.

The first list structure is searched for a combination matching the destination address of the packet and the selected global address (in the embodiment, Ad). The second list structure of the retrieved combination is search for an available port number. As are result, the search for available port numbers can be simplified and expedited.

When a port number is searched for, a search upper limit is set and in the second list structure, when nodes of a quantity equivalent to the upper limit have been sequentially searched and no port number is retrieved, from the allocable global address group, a different global address is selected and allocated to the destination address of the packet. As a result, the search time can be reduced.

In the embodiment, when a packet is received that is from a communication terminal on a global network and to a communication terminal on a private network, it is determined whether connection from the communication terminal on the private network to the global network already exists. Only when the connection already exists are the destination global address and port number of the packet translated to the private address and port number. Consequently, even if different packets have the same global address and port number, the packets can be properly transmitted from the communication terminal on the global network to the communication terminal on the private network.

The address translation method described in the present embodiment may be implemented by executing a prepared program on a computer such as a personal computer and a workstation. The program is stored on a computer-readable medium such as a hard disk, a flexible disk, a CD-ROM, an MO, and a DVD, read out from the medium to be executed by the computer. The program may be distributed through a network such as the Internet.

The address translation device 100 described in the present embodiment can be realized by an application specific integrated circuit (ASIC) such as a standard cell or a structured ASIC, or a programmable logic device (PLD) such as a field-programmable gate array (FPGA). For example, functional units (receiver 601 to second searcher 613) of the address translation device 100 are defined in hardware description language (HDL), which is logically synthesized and applied to the ASIC, the PLD, etc., thereby enabling manufacture of the address translation device 100.

### EXPLANATIONS OF LETTERS OR NUMERALS

100 address translation device
101 LAN
102 WAN
104 destination IP
105 destination port
106 source private IP
107 source private port
108 source global IP
109 source global port
601 receiver
603 address determiner
604 translator
605 transmitter
606 setter
607 first determiner
608 first list structure generator
609 second determiner
610 node generator
611 second list structure generator

## Claims

1. An address translation device comprising:
a receiver that receives a packet that is from a communication apparatus on a private network to a communication apparatus on a global network;
an address determiner that determines whether a destination address of a first packet received by the receiver matches a destination address of a second packet that was received before the first packet;
a translator that when the address determiner makes a determination of no matching, translates a source private address of the first packet to a source global address that has been allocated to the second packet; and
a transmitter that transmits the first packet that has been translated by the translator.

2. The address translation device according to claim 1, wherein
the translator, when the address determiner makes a determination of no matching, translates a source private port number of the first packet to a source global port number of the second packet, and
the transmitter transmits the first packet that has been translated by the translator.

3. The address translation device according to claim 2, wherein
the address determiner determines whether the destination address and a destination port number of the first packet match the destination address and a destination port number of the second packet, and whether the source private address and the source private port number of the first packet match a source private address and a source private port number of the second packet,
the translator, when the address determiner makes a determination of respective matching, translates the source private address and the source private port number of the first packet to the source private address and the source private port number of the second packet, and
the transmitter transmits the first packet that has been translated by the translator.

4. The address translation device according to claim 2, wherein
the address determiner determines whether the destination address and a destination port number of the first packet match the destination address and a destination port number of the second packet, and whether the source private address and the source private port number of the first packet match a source private address and a source private port number of the second packet,
the translator, when the address determiner determines that the destination address of the first packet matches the destination address of the second packet and, determines that the destination port number of the first packet is different from the destination port number of the second packet or determines that the source private address of the first packet is different from the source private address of the second packet or determines that the source private port number of the first packet is different from the source private port number of the second packet, translates the source private address of the first packet to the source global address of the second packet and translates the source private port number of the first packet to a global port number that is in a global port number group corresponding the source global address and that is different from the source global port number of the second packet, and
the transmitter transmits the first packet that has been translated by the translator.

5. The address translation device according to claim 4 and further comprising:
a setter that sets the destination address of the second packet and the source global address of the second packet as a combination;
a first determiner that determines whether the combination set by the setter is among a series of combinations that were set before the combination and are associated in a first list structure;
a first list structure generator that associates with a tail of the first list structure of the associated series of combinations, the combination determined by the first determiner to not be among the series of combinations;
a second determiner that determines whether a node having the source global port number that has been allocated to the second packet is among a series of nodes associated in a second list structure that indicates ports that have been allocated for each combination set by the setter;
a node generator that when the second determiner determines that a node having the source global port number that has been allocated to the second packet is not among the series of nodes, generates a node having the source global port number that has been allocated to the second packet; and
a second list structure generator that associates with a tail of the second list structure of the associated series of nodes, the node generated by the node generator.

6. The address translation device according to claim 5, wherein
the second list structure generator, based on the global port number allocated to the second packet and global port numbers of the series of nodes in the second list structure, associates with the second list structure and in sequence of global port number, the node generated by the node generator.

7. The address translation device according to claim 5 and further comprising:
a first searcher that sequentially searches the first list structure generated by the first list structure generator, for the combination including the global address that is of the second packet and matches the destination address of the first packet; and
a second searcher that sequentially searches global port numbers of the series of nodes in the second list structure corresponding to the combination retrieved by the first searcher, for an available global port number in the global port number group, wherein
the translator translates the source private address of the first packet to the source global address of the second packet and translates the source private port number of the first packet to a global port number retrieved by the second searcher, and
the transmitter transmits the first packet that has been translated by the translator.

8. The address translation device according to claim 7, wherein
the second searcher sequentially searches the series of nodes in the second list structure corresponding to the combination retrieved by the first searcher, up to a given number of nodes,
the translator translates the source private address of the first packet to the source global address of the second packet and translates the source private port number of the first packet to a global port number retrieved by the second searcher, and
the transmitter transmits the first packet that has been translated by the translator.

9. The address translation device according to claim 8, wherein
the translator, when no available global port number is retrieved by the second searcher, translates the source private address of the first packet to a source global address that is different from the source global address that has been allocated to the second packet and translates the source private port number of the first packet to a global port number selected from a global port group corresponding to the source global address that is different from the source global address that has been allocated to the second packet, and
the transmitter transmits the first packet that has been translated by the translator.

10. The address translation device according to any one of claims 1 to 8, wherein
the receiver receives a packet that is from the communication apparatus on the global network and to the communication apparatus on the private network,
the address determiner determines whether a destination address and a destination port number of a third packet received by the receiver match the source global address and a source global port number of the first packet that has been translated, and whether a source global address and a source global port number of the third packet match the destination address and the destination port number of the first packet,
translator, when the address determiner makes a determination of matching, translates the destination address and the destination port number of the third packet to the source private address and a source private port number of the first packet, and
the transmitter transmits the third packet that that has been translated by the translator.

11. An address translation method executed by a computer, the address translation method comprising:
receiving a packet that is from a communication apparatus on a private network and to a communication apparatus on a global network;
determining whether a destination address of a first packet received at the receiving matches a destination address of a second packet that was received before the first packet;
translating, when at the determining a determination of no matching is made, a source private address of the first packet to a source global address that has been allocated to the second packet; and
transmitting the first packet that has been translated at the translating.

12. An address translation program causing a computer to execute:
receiving a packet that is from a communication apparatus on a private network and to a communication apparatus on a global network;
determining whether a destination address of a first packet received at the receiving matches a destination address of a second packet that was received before the first packet;
translating, when at the determining a determination of no matching is made, a source private address of the first packet to a source global address that has been allocated to the second packet; and
transmitting the first packet that has been translated at the translating.
